# EUROPEAN PATENT APPLICATION

(11) **EP 2 559 552 A1**
(43) Date of publication of application: **20.02.2013**
(21) Application number: 11768734.3
(22) Date of filing: 04.04.2011
(51) Int. Cl.: B32B 27/18, C09J 5/00

(54) **CURED MULTILAYER SHEET PRODUCTION METHOD AND CURED MULTILAYER SHEET**

(30) Priority: 29.03.2011 JP 2011072649; 12.04.2010 JP 2010091701
(71) Applicant: Nitto Denko Corporation, Ibaraki-shi, Osaka 567-8680 (JP)
(72) Inventor: IMOTO,Eiichi, Ibaraki-shi Osaka 567-8680 (JP); SHIMAZAKI,Yuta, Ibaraki-shi Osaka 567-8680 (JP); KITAHARA,Tatsuya, Ibaraki-shi Osaka 567-8680 (JP); NAGASAKI,Kunio, Ibaraki-shi Osaka 567-8680 (JP)
(74) Representative: Grünecker, Kinkeldey, Stockmair & Schwanhäusser
(86) International application number: PCT/JP2011/058514
(87) International publication number: WO 2011/129213

(57) **Abstract**

Disclosed is a production method of a cured multilayer sheet, comprising a step (1) for adjacently laminating a first uncured layer (A) formed by a first curable resin composition (a) and a second uncured layer (B) formed by a second curable resin composition (b) to form a laminated body (X), and a step (2) for curing, wherein the first curable resin composition (a) contains a polymerizable monomer (m1) or a partial polymer thereof, and an immiscible substance (f), the second curable resin composition (b) contains a polymerizable monomer (m2) and a polymer (p2), the concentration (c1) of the polymerizable monomer (m1) in the first curable resin composition (a) is higher than the concentration (c2) of the polymerizable monomer (m2) in the second curable resin composition (b), and in the laminating step (1), the immiscible substance (f) is eccentrically distributed on an interface or near the interface on the side opposite to the second uncured layer (B), and thereafter the curing step (2) is performed, so that a cured multilayer sheet, wherein a substance different from a polymer cured layer is eccentrically located on the surface of the polymer cured layer, can be produced at high productivity.

## Description

### TECHNICAL FIELD

The present invention relates to a method for producing a cured multilayer sheet having a layer of structure in which an immiscible substance is eccentrically located. A cured multilayer sheet obtained by the production method of the present invention can suitably be used in applications of, for example, optical sheets, barrier sheets, flame-retardant sheets, electronic circuits, power electronic materials, adhesive, tapes or sheets and medical fields.

### BACKGROUND ART

A composite substrate, in which a substance different from a substrate is eccentrically located on the surface of the substrate, is expected as a substrate provided with new functions including optical and electric functions. However, it is not easy to form a layer having, for example, fine particles on the surface of a sheet or film as a substrate. For example, a fine particle layer (layer containing fine particles) can be formed on the surface of a substrate by dispersing fine particles in a solution prepared by dissolving a polymer component in an organic solvent as a binder to obtain a solution with fine particles dispersed therein, followed by coating the solution on the substrate, and volatilizing the organic solvent by thermal drying. However, this method is difficult when a substrate is dissolved with an organic solvent or the like or when a substrate has a low heat resistance, and thus is easily melted or deformed by heat-drying, and it is difficult to coat the surface of a substrate with the solution with fine particles dispersed therein when the surface of the substrate has high adherability like a pressure-sensitive adhesive layer. Further, the organic solvent must be dried when the solution is used, water must be dried even though an aqueous dispersion liquid is used in place of the solution, and the method of forming a fine particle layer is not preferable in terms of the environment and energy conservation. When the polymer component in the solution used for forming the fine particle layer is a material different from the substrate, the fine particle layer may be delaminated at an interface with the substrate unless the adhesion is sufficient.

A fine particle layer can be formed on the surface of a substrate by forming a fine particle layer on a film subjected to a release treatment and transferring the layer onto a matrix sheet, but when affinity and compatibility between the substrate and the fine particle layer are low, tackiness between the substrate layer and the fine particle layer is poor, and problems of delamination between layers and the like easily occur. Further, when both the substrate and fine particle layer have little tackiness, it is difficult to laminate the former and the latter, and it becomes necessary to coat one or both thereof with an adhesive or the like before lamination.

As described above, functions required for polymer sheets have become advanced from year to year, and a great number of products prepared by laminating a variety of polymer sheets for satisfying the requirements have been placed on the market. In recent years, however, for example, very thin surface functional layers have been required for a variety of polymer sheets, and mere lamination of different polymer sheets can no longer satisfy the requirements.

The present inventors have previously found that if an immiscible substance-containing polymerizable composition layer containing a polymerizable monomer and an immiscible substance immiscible with a polymer obtained by polymerizing the polymerizable monomer is provided on at least one surface of a monomer absorption layer capable of absorbing the polymerizable monomer, the immiscible substance migrates within the immiscible substance-containing polymerizable composition layer, so that an immiscible substance-eccentrically located polymerizable composition layer is obtained, and by polymerizing the immiscible substance-eccentrically located polymerizable composition layer, a polymer member having a laminated structure of an immiscible substance-eccentrically located polymer layer and a monomer absorption layer is obtained. It has also been found that by using particles as the immiscible substance, irregularities by particles can be formed on the surface opposite to the interface with monomer absorption layer in the immiscible substance-eccentrically located polymer layer (Patent Document 1).

### PRIOR ART DOCUMENT

### PATENT DOCUMENT

Patent Document 1: JP-A-2008-6817

### DISCLOSURE OF THE INVENTION

### PROBLEMS TO BE SOLVED BY THE INVENTION

However, in the aforementioned method, a monomer absorption layer is specially required in addition to a component for forming a polymer layer, so that a production process is complicated, and it is required to perform aging after lamination and before curing for ensuring that an immiscible substance is eccentrically located on the surface. Further, the aforementioned method has such a problem that when a tape or sheet is prepared, the surface of the tape or sheet is spontaneously formed into a three-dimensional shape (for example, creased, rugged, corrugated, etc.) or the tape or sheet itself is curled after curing if the monomer absorption layer is a polymer having a high degree of crosslinking.

It is an object of the present invention to provide a method capable of producing at high productivity a cured multilayer sheet of multilayer structure having a structure, in which a substance different from a polymer cured layer formed by curing a polymerizable monomer is eccentrically located on the surface of the polymer cured layer, and a cured multilayer sheet obtained by the method.

### MEANS FOR SOLVING THE PROBLEMS

As a result of conducting vigorous studies for solving the above-mentioned problems, the present inventors have found that the problems can be solved by the production method described below, leading to completion of the present invention.

That is, the present invention relates to a production method of a cured multilayer sheet, including a step (1) for adjacently laminating a first uncured layer (A) formed by a first curable resin composition (a) and a second uncured layer (B) formed by a second curable resin composition (b) to form a laminated body (X), and a step (2) for curing the laminated body (X), wherein the first curable resin composition (a) contains a polymerizable monomer (m1) or a partial polymer thereof, and an immiscible substance (f) immiscible with a polymer (p1) obtained by polymerizing the polymerizable monomer (m1), the second curable resin composition (b) contains a polymerizable monomer (m2) and a polymer (p2) which are compatible with the polymerizable monomer (m1) and immiscible with the immiscible substance (f), the concentration (c1) of the polymerizable monomer (m1) based on the polymerizable monomer (m1) or the partial polymer thereof in the first curable resin composition (a) is higher than the concentration (c2) of the polymerizable monomer (m2) based on the polymerizable monomer (m2) and the polymer (p2) in the second curable resin composition (b), and the laminating step (1), the immiscible substance (f) is migrated within the first uncured layer (A) to eccentrically distribute the immiscible substance (f) on an interface or near the interface on the side opposite to the second uncured layer (B), and thereafter the curing step (2) is performed.

In the production method of a cured multilayered sheet, the concentration (c1) is preferably higher than the concentration (c2) of (m2) by 15% by weight or more.

In the production method of a cured multilayered sheet, a particle or a polymer is suitably used as the immiscible substance (f).

In the production method of a cured multilayered sheet, the curing step (2) is preferably performed by irradiation of an active energy ray.

The present invention also relates to a cured multilayer sheet obtained by the production method.

### EFFECT OF THE INVENTION

As described above, the production method of a cured multilayered sheet of the present invention includes a laminating step (1) and a curing step (2). First, in the laminating step (1), a first uncured layer (A) and a second uncured layer (B) are laminated in a contact form to obtain a laminated body (X). The first uncured layer (A) is formed from a first curable resin composition (a) containing a polymerizable monomer (m1) or a partial polymer thereof and an immiscible substance (f). On the other hand, the second uncured layer (B) is formed from a second curable resin composition (b) containing a polymerizable monomer (m2) and a polymer (p2), and the polymerizable monomer (m2) and polymer (p2) are compatible with the polymerizable monomer (m1) associated with the first curable resin composition (a) and not compatible with the immiscible substance (f). Moreover, control is performed so that the concentration (c1) of the polymerizable monomer (m1) in the first curable resin composition (a) is higher than the concentration (c2) of the polymerizable monomer (m2) in the second curable resin composition (b).

As described above, control is performed such that the concentration (c1) of the polymerizable monomer (m1) contained in the first uncured layer (A) is higher than the concentration (c2) of the polymerizable monomer (m2) contained in the second uncured layer (B), so that in the laminated body (X), the polymerizable monomer (m1) in the first uncured layer (A) is diffused into the second uncured layer (B), and the polymer (p2) in the second uncured layer (B) is diffused into the first uncured layer (A). As a result, in the laminated body (X), an eccentric structure is obtained in which the immiscible substance (f) migrates within the first uncured layer (A) and is eccentrically distributed in a layered form on an interface or near the interface on the side opposite to the second uncured layer (B) . After the immiscible substance (f) is eccentrically located in this way, a curing step (2) is performed, so that polymerizable monomers (m) and (m2) are cured while retaining the eccentric structure of the immiscible substance (f) to thereby obtain a laminated body (Y) of cured polymerizable monomers (m1) and (m2), namely a cured multilayer sheet.

As described above, by providing a difference between the concentration (c1) and the concentration (c2), the immiscible substance (f) can be eccentrically located within the first uncured layer (A) by a convenient method of laminating the first uncured layer (A) and the second uncured layer (B), so that a cured multilayer sheet can be conveniently prepared. The first curable resin composition (a) and the second curable resin composition (b) which form the cured multilayer sheet of the present invention are each a composition containing a polymerizable monomer, preparation of each composition is easy, and a cured multilayer sheet can be produced conveniently at high productivity without specially requiring a monomer absorption layer as in Patent Document 1. The cured multilayer sheet of the present invention is formed by the composition (a) and composition (b), so that even if these compositions are compositions that have a high degree of crosslinking after curing, occurrence of curls and the like can be suppressed and deformation of the sheet after curing can be suppressed as in the case of using a monomer absorption layer.

Since after the polymerizable monomer (m1) in the first uncured layer (A) is diffused to the second uncured layer (B) and the polymer of the polymerizable monomer (m2) and/or the polymerizable polymer in the second uncured layer (B) are diffused into the first uncured layer (A), the curing step (2) is performed, the cured multilayer sheet associated with the laminated body (Y) obtained is no longer subject to delamination between layers due to unification of the composition layers (A) and (B).

Further, according to a cured multilayer sheet production method of the present invention, it is not required to evaporate and remove volatile components (e.g. organic solvent and organic compound) contained in the first curable resin composition (a) and the second curable resin composition (b), and therefore burden on the environment can be reduced, thus being advantageous from the environmental viewpoint.

### BRIEF DESCRIPTION OF THE DRAWINGS

Fig. 1 is one example of a schematic sectional view showing a cured multilayer sheet production method of the present invention.
Fig. 2 is a scanning electron micrograph of the cross section of a cured multilayer sheet of Example 1.
Fig. 3 is a scanning electron micrograph of the cross section of a cured multilayer sheet of Example 2.
Fig. 4 is a scanning electron micrograph of the cross section of a cured multilayer sheet of Example 3.
Fig. 5 is a scanning electron micrograph of the cross section of a cured multilayer sheet of Example 4.
Fig. 6 is a scanning electron micrograph of the cross section of a cured multilayer sheet of Comparative Example 1.
Fig. 7 is a photograph of the external appearance of the cured multilayer sheet of Example 4.
Fig. 8 is a photograph of the external appearance of a cured multilayer sheet of Comparative Example 2.
Fig. 9 is a scanning electron micrograph of the cross section of a cured multilayer sheet of Example 5.
Fig. 10 is a scanning electron micrograph of the cross section of a cured multilayer sheet of Example 6.
Fig. 11 is a scanning electron micrograph of the cross section of a cured multilayer sheet of Example 7.
Fig. 12 is a scanning electron micrograph of the cross section of a cured multilayer sheet of Comparative Example 3.
Fig. 13 is a scanning electron micrograph of the cross section of a cured multilayer sheet of Comparative Example 4.

### MODE FOR CARRYING OUT THE INVENTION

### [Production Method Of Cured Multilayer Sheet]

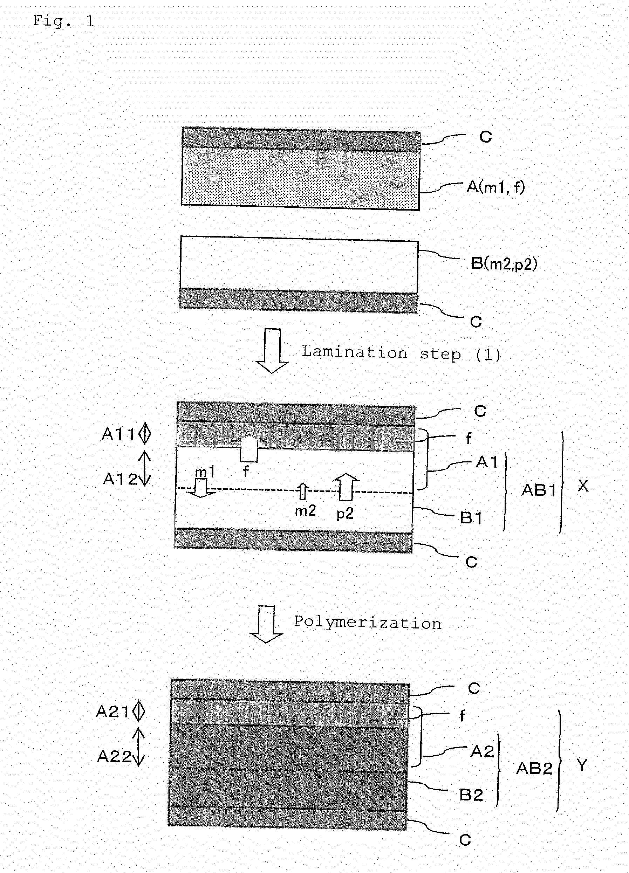

Hereinbelow, the production method of a cured multilayer sheet of the present invention will be described with reference to Fig. 1. In the production method of a cured multilayer sheet of the present invention, first, a first uncured layer (A) and a second uncured layer (B) are laminated to obtain a laminated body (X) in a laminating step (1). The first uncured layer (A) contains a polymerizable monomer (m1) or a partial polymer thereof and an immiscible substance (f). On the other hands, the second uncured layer (B) contains a polymerizable monomer (m2) and a polymer (p2). Lamination of the first uncured layer (A) and the second uncured layer (B) should be performed such that these layers are adjacently laminated, and the first uncured layer (A) can be laminated on one surface or both surfaces of the second uncured layer (B). Fig. 1 shows the case where the first uncured layer (A) is laminated only on one surface of the second uncured layer (B). In addition, in Fig. 1, a support substrate (C) is provided on the side which is not involved in lamination in each of the first uncured layer (A) and the second uncured layer (B).

The polymerizable monomer (m1) in the first uncured layer (A) is compatible with the polymerizable monomer (m2) and the polymerizable polymer in the second uncured layer (B), and therefore in the laminated body (X) obtained by the laminating step (1), polymerizable monomers (m1) and (m2) can be partially diffused into mutually other layers in the laminated surface of the first uncured layer (A) and the second uncured layer (B) . Moreover, since the concentration (c1) of the polymerizable monomer (m1) in the first uncured layer (A) is higher than the concentration (c2) of the polymerizable monomer (m2) in the second uncured layer (B), diffusion of the polymerizable monomer (m1) into the second uncured layer (B) increases, and accordingly diffusion of the polymer (p2) in the second uncured layer (B) into the first uncured layer (A) increases. On the other hand, in the first uncured layer (A), the immiscible substance (f) migrates, and the immiscible substance (f) is eccentrically distributed on an interface or near the interface on the side opposite to the second uncured layer (B), so that a first diffusion layer (A1) having an immiscible substance-eccentrically located portion (A11) and an immiscible substance-absent portion (A12) is formed. A second diffusion layer (B1) is formed from the second uncured layer (B).

The concentration (c1) is higher than the concentration (c2). The difference between the concentration (c1) and the concentration (c2) is preferably 15% by weight or more, more preferably 20% by weight or more, further preferably 30% by weight or more. The concentration difference allows the immiscible substance to be eccentrically located in the first uncured layer (A), but by having the concentration difference of 15% by weight or more, the immiscible substance in the first uncured layer (A) can be more significantly eccentrically located. When the concentration (c2) is higher than the concentration (c1), the immiscible substance cannot be sufficiently eccentrically located in the first uncured layer (A).

The phenomenon of eccentric location of the immiscible substance (f) associated with the immiscible substance-eccentrically located portion (A11) is ascribable to diffusion of the polymer (p2) from the second uncured layer (B) . That is, it is believed that the polymerizable monomer (m1) is diffused into the second uncured layer (B) while the polymer (p2) is diffused into the first uncured layer (A), so that the immiscible substance (f) which cannot be diffused in a direction toward the second uncured layer (B) is eccentrically located in such a manner as to remain in the first uncured layer (A).

As described above, in the laminated body (X), the first uncured layer (A) and the second uncured layer (B) have their components diffused into the mutually other layer, and therefore an interface between the immiscible substance-absent portion (A12) of the first diffusion layer (A1) and the second diffusion layer (B1) cannot be recognized (these complex sites are described as AB1 in Fig. 1), but in Fig. 1, a state before diffusion is shown by a dashed line for the sake of convenience.

The laminated body (X) is then subjected to a curing step (3), so that at least the polymerizable monomer (m1) and the polymerizable monomer (m2) in the first diffusion layer (A1) and the second diffusion layer (B1) are polymerized to obtain a laminated body (Y) in which a first cured layer (A2) having an immiscible substance-eccentrically located portion (A21) and a second cured layer (B2), which are cured with the eccentric structure retained, are formed. The first cured layer (A2) has the immiscible substance-eccentrically located portion (A21) and an immiscible substance-absent potion (A22). Also in the laminated body (Y), an interface between the immiscible substance-absent portion (A22) of the first cured layer (A2) and the second cured layer (B2) cannot be recognized (these complex sites are described as AB2 in Fig. 1), but in Fig. 1, a state before diffusion is shown by a dashed line for the sake of convenience in the same manner as described above.

### [Laminating Step (1)]

In the laminating step (1), the first uncured layer (A) and the second uncured layer (B) are laminated so as to contact each other to prepare a laminated body (X) having at least a structure of first uncured layer (A) /second uncured layer (B).

### (First Curable Resin Composition (a))

The first curable resin composition (a) contains at least the polymerizable monomer (m1) capable of being polymerized and a partial polymer thereof and the immiscible substance (f). A polymerization initiator can be appropriately contained in the first curable resin composition (a). When the polymerizable monomer (m1) is photo-cured, the first curable resin composition (a) can contain a photopolymerization initiator as a polymerization initiator. The partial polymer is a partial polymerization composition with a part of the polymerizable monomer (m1) polymerized. When the first curable resin composition (a) contains a photopolymerization initiator, the partial polymerization composition with a part of the polymerizable monomer (m1) polymerized can suitably be used from the viewpoint of handling properties, coatablity and the like.

The first curable resin composition (a) contains the polymerizable monomer (m1) or a partial polymer thereof and the immiscible substance (f) immiscible therewith, but the concentration (c1) of the polymerizable monomer (m1) based on the polymerizable monomer (m1) or a partial polymer thereof is preferably controlled to 50 to 100% by weight. The concentration (c1) is preferably 70 to 100% by weight, further preferably 80 to 100% by weight. When the first curable resin composition (a) does not contain a partial polymer of the polymerizable monomer (m1), the concentration (c1) is 100% by weight. The concentration (c1) is set to be higher than the concentration (c2) associated with the second curable resin composition (b), and preferably set to be higher by 15% by weight or more.

It is important that the polymerizable monomer (m1) is a compound capable of being polymerized utilizing light energy or heat energy regardless of the reaction mechanism such as radical polymerization or cationic polymerization. Examples of the polymerizable monomer (m1) include radical-polymerizable monomers such as an acryl-based monomer to form an acryl-based polymer; cationic polymerizable monomers such as an epoxy-based monomer to form an epoxy-based resin, an oxetane-based monomer to form an oxetane-based resin and a vinyl ether-based monomer to form a vinyl ether-based resin; combinations of polyisocyanates and polyols to form an urethane-based resin; and combinations of polycarboxylic acids and polyols to form a polyester-based resin. The polymerizable monomer (m1) may be used alone or in combination of two or more kinds. Examples of the polymer (p1) obtained by polymerizing the polymerizable monomer (m1) include the aforementioned various kinds of polymers.

As the polymerizable monomer (m1), an acryl-based monomer is suitably used because of the high polymerization rate and superior productivity. Therefore, the polymer (p1) is preferably an acryl-based polymer.

The acryl-based polymer, the epoxy resin, the oxetane-based resin, the vinyl ether-based resin, the urethane-based resin and the polyester-based resin which are associated with the polymer (p1) function as a base polymer of an acryl-based pressure-sensitive adhesive (pressure-sensitive adhesive), a base polymer of an epoxy-based pressure-sensitive adhesive, a base polymer of an oxetane-based pressure-sensitive adhesive, a base polymer of a vinyl ether-based pressure-sensitive adhesive, a base polymer of an urethane-based pressure-sensitive adhesive and a base polymer of a polyester-based pressure-sensitive adhesive, respectively. Therefore, the first curable resin composition (a) can be used as a pressure-sensitive adhesive composition. When the first curable resin composition (a) is a pressure-sensitive adhesive composition, pressure-sensitive adhesive layers are formed as the first cured layer (A2) and the second cured layer (B2).

As the acryl-based monomer, a (meth)acrylic acid ester can be used, and particularly a (meth) acrylic acid alkyl ester having an alkyl group can suitably be used. The "(meth)acryl" described above represents "acryl" and/or "methacryl", and the same applies to others.

As the (meth)acrylic acid alkyl ester having an alkyl group, one can be appropriately selected from known or conventional (meth)acrylic acid alkyl esters having a linear or branched alkyl group and used.

Examples of the (meth)acrylic acid alkyl ester having a linear or branched alkyl include (meth)acrylic acid alkyl esters, the alkyl group of which has 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Above all, preferable are (meth)acrylic acid alkyl esters, the alkyl group of which has 2 to 14 carbon atoms, and more preferable are (meth)acrylic acid alkyl esters, the alkyl group of which has 2 to 10 carbon atoms.

(Meth)acrylic acid esters other than (meth)acrylic acid alkyl esters include, for example, (meth)acrylic acid esters having an alicyclic hydrocarbon group and (meth)acrylic acid esters having an aromatic hydrocarbon group. (Meth)acrylic acid esters having an alicyclic hydrocarbon group include, for example, (meth)acrylic acid cycloalkyl esters such as cyclopentyl (meth)acrylate and cyclohexyl (meth)acrylate, and isobornyl (meth)acrylate. (Meth) acrylic acid esters having an aromatic hydrocarbon group include, for example, (meth) acrylic acid aryl esters such as phenyl (meth)acrylate.

The (meth)acrylic acid ester can be used alone or in combination of two or more kinds. The (meth) acrylic acid ester is used as a main monomer component (monomer main component) of an acryl-based polymer, and therefore when the cured multilayer sheet is used in an application where adherability is required for the first cured layer (A2) of the cured multilayer sheet, the monomer ratio (content in polymerizable monomer components) of the (meth)acrylic acid ester (particularly (meth) acrylic acid alkyl ester) is preferably 70% or more by weight, more preferably 80% or more based on the total amount of monomer components to form the acryl-based polymer, for example. That is, in the first curable resin composition (a), the (meth)acrylic acid ester is contained in an amount of preferably 70% by weight or more, more preferably 80% by weight or more, based on the total amount of the polymerizable monomer (m1) or a partial polymer thereof.

For the first curable resin composition (a), various kinds of copolymerizable monomers such as a polar group-containing monomer and a polyfunctional monomer may be used as the polymerizable monomer (m1). For example, by using a copolymerizable monomer, for example, the adhering strength of the first cured layer (A2) and the second cured layer (B2) to an adherend can be improved, and the cohesive strength of the first cured layer (A2) and second cured layer (B2) can be increased. The copolymerizable monomer can be used alone or in combination of two or more kinds.

Examples of the polar group-containing monomer include carboxyl group-containing monomers such as acrylic acid, methacrylic acid, caboxyethyl acrylate, carboxypentyl acrylate, itaconic acid, maleic acid and crotonic acid; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methyl acrylate; acid anhydride monomers such as maleic anhydride and itaconic anhydride; sulfonic acid group-containing monomers such as 2-acryl amide-2-methylpropane sulfonic acid, sulfopropyl acrylate and sodium vinylsulfonate; and phosphoric acid-containing monomers such as 2-hydroxyethylacryloyl phosphate. In addition, the following monomers can be included: amide-based monomers such as (meth)acrylamide, N-substituted (meth)acrylamides such as N-methylol acrylamide; imide group-containing monomers such as cyclohexyl maleimide and isopropyl maleimide; isocyanate group-containing monomers such as 2-methacryloyloxyethyl isocyanate; succinimide-based monomers such as N-(meth)acryloyloxymethylene succinimide, N-(meth)acryloyl-6-oxyhexamethylene succinimide and N-(meth)acryloyl-8-oxyoctamethylene succinimide; vinyl-based monomers such as N-vinylpyrrolidone, N-vinylcarboxylic acid amides and N-vinylcaprolactam; (meth)acrylic acid alkoxy acryl-based monomers such as 2-methoxyethyl (meth) acrylate and 2-ethoxyethyl (meth)acrylate; cyano acrylate-based monomers such as acrylonitrile and methacrylonitrile; glycidyl (meth)acrylate, tetrahydrofurfuryl (meth)acrylate, polyethylene glycol (meth)acrylate, polypropylene glycol (meth)acrylate and fluorine atom-containing (meth)acrylate; and silicon atom-containing (meth)acrylate. One or more kinds thereof can be used. As the polar group-containing monomer, carboxyl group-containing monomers are preferred, and acrylic acids are especially preferred among those described above.

The amount of polar group-containing monomer used can be appropriately adjusted according to the purpose and application of the cured multilayer sheet obtained, but is preferably 30% by weight or less, further preferably 1 to 30% by weight, still further preferably 2 to 20% by weight based on the total amount of polymerizable monomer or a partial polymer thereof, for example, when the cured multilayer sheet is used in an application where adherability is required for the first cured layer (A2) and the second cured layer (B2) of the cured multilayer sheet. If the content of the polar group-containing monomer is more than 30% by weight, the cohesive strength of the polymer obtained may become so high that for example, the first cured layer (A2) and the second cured layer (B2) are too hard, leading to a reduction in adhesion. If the amount of polar group-containing monomer used is too low, i.e. less than 1% by weight based on the total amount of polymerizable monomer, the coherent strength of the polymer obtained may decrease, so that a high shearing force cannot be obtained.

Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol tri(meth)acrylate, allyl (meth)acrylate, vinyl (meth)acrylate, divinyl benzene, epoxy acrylate, polyester acrylate, urethane acrylate, butyl di(meth)acrylate and hexyl di(meth)acrylate.

The polyfunctional monomer can be appropriately adjusted according to the purpose and application of the cured multilayer sheet obtained, and is suitable for imparting a coherent strength to a polymer layer obtained and retaining a shape. When the cured multilayer sheet is used in an application where adherability is required for the first cured layer (A2) and the second cured layer (B2) of the cured multilayer sheet, the ratio of the polyfunctional monomer is, for example, preferably 2% by weight or less, further preferably 0.01 to 2% by weight, further preferably 0.02 to 1% by weight, based on the total amount of polymerizable monomer (m1) and a partial polymer thereof for the acryl-based polymerizable composition. If the ratio of the polyfunctional monomer exceeds 2% by weight based on the total amount of polymerizable monomer (m1) or partial polymer thereof, the polymer (p1) obtained may have a too high cohesive strength and become too fragile, thus leading to occurrence of deficiencies. If the ratio of the polyfunctional monomer is too low (less than 0.01% by weight based on the total amount of polymerizable monomer (m1) or partial polymer thereof), it may be impossible to achieve the purpose of use of the polyfunctional monomer.

When the cured multilayer sheet is used in an application where a high-hardness property is required for the first cured layer (A2) and the second cured layer (B2) of the cured multilayer sheet (for example, film applications, hard coat applications and the like), the monomer ratio (content in monomer components) of the (meth)acrylic acid ester is, for example, preferably 95% by weight or less, further preferably 0.01 to 95% by weight, still further preferably 1 to 70% by weight, based on the total amount of monomer components to form the acryl-based polymer.

When the cured multilayer sheet is used in an application where a high-hardness property is required for the first cured layer (A2) and the second cured layer (B2) of the cured multilayer sheet, the ratio of the polar group-containing monomer is preferably 95% by weight or less, further preferably 0. 01 to 95% by weight, still further preferably 1 to 70% by weight, based on the total amount of polymerizable monomer or a partial polymer thereof. If the amount of polar group-containing monomer used is more than 95% by weight, for example the water resistance may become inadequate to increase a change in quality with a usage environment (humidity, moisture or the like) as a cured multilayer sheet. If the ratio of polar group-containing monomer is too low (for example, 0.01% by weight or less), the added amount of (meth)acrylic acid ester (for example isobornyl acrylate) having a high glass transition temperature (Tg) or polyfunctional monomer may increase in the case of obtaining a high-hardness property, so that the cured multilayer sheet obtained becomes too fragile.

When the cured multilayer sheet is used in an application where a high-hardness property is required for the first cured layer (A2) and the second cured layer (B2) of the cured multilayer sheet, the ratio of the polyfunctional monomer is preferably 95% by weight or less, further preferably 0.01 to 95% by weight, still further preferably 1 to 70% by weight, based on the total amount of polymerizable monomer or a partial polymer thereof. If the amount of polyfunctional monomer used is more than 95% by weight based on the total amount of polymerizable monomer or a partial polymer thereof, cure shrinkage during polymerization may increase, so that a uniform film-shaped or sheet-shaped cured multilayer sheet may not be obtained, and the cured multilayer sheet obtained may become too fragile. If the amount of polyfunctional monomer used is too low (for example, 0.01% by weight or less), it may be impossible to obtain a cured multilayer sheet having an adequate solvent resistance and heat resistance.

Copolymerizable monomers other than the above-mentioned polar group-containing monomers and polyfunctional monomers, which can be used along with the (meth) acrylic acid alkyl ester, include, for example, vinyl esters such as vinyl acetate and vinyl propionate; aromatic vinyl compounds such as styrene and vinyl toluene; olefins or dienes such as ethylene, butadiene, isoprene and isobutylene; vinyl ethers such as vinyl alkyl ether; and vinyl chloride.

### (Immiscible Substance (f))

The immiscible substance (f) is not particularly limited as long as it is a substance that is immiscible (not dissolved) with the polymer (p1) obtained by polymerizing the polymerizable monomer (m1) and also immiscible with the polymerizable monomer (m2) and the polymer (p2) used in the second curable resin composition (b), and may be an inorganic substance (inorganic material) or an organic substance (organic material). The immiscible substance (f) may be a solid, or may have a fluidity.

Whether or not a substance is the immiscible substance (f) with a polymer can be determined by a degree of size at which the substance or an aggregate thereof is dispersed in the polymer in a general method independent of the present invention (for example, a method in which a substance is dissolved in a polymerizable monomer and the polymerizable monomer is polymerized into a polymer to make a determination; a method in which a polymer is dissolved in a solvent that dissolves the polymer, a substance is added thereto, the mixture is stirred, and the solvent is then removed to make a determination; a method in which if the polymer is a thermoplastic polymer, the polymer is heated and dissolved, a substance is blended therein, and the mixture is cooled, followed by making a determination, etc.) by visual inspection, optical microscopy, scanning electron microscopy (SEM), transmission electron microscopy (TEM), X-ray diffraction or the like. For the evaluation criterion thereof, the substance or an aggregate thereof has a diameter of 5 nm or more if it can be approximated as a globular form such as a sphere, a cube or an undefined form, and the length of the longest side is 10 mm or more if the substance or an aggregate thereof can be approximated as a columnar form such as a rod form, a laminar form or a rectangular parallelepiped form.

More specific methods for dispersing a substance or an aggregate thereof in a polymer include, for example, a method in which 100 parts by weight of polymerlzable monomer to form a polymer, 0.5 parts by weight of photopolymerization initiator and 50 parts by weight of substance or an aggregate thereof are additively or uniformly dispersed, and the dispersion is then coated on a PET film in a thickness of about 10 to 500 µm, and polymerized by irradiation of ultraviolet rays from a black light while eliminating influences of oxygen in an inert gas such as nitrogen or by a cover film; a method in which a polymer is prepared beforehand by any method such as solution polymerization or ultraviolet polymerization, a substance or an aggregate thereof in an amount corresponding to 50 parts by weight based on 100 parts by weight of polymer is added to a solvent system having the polymer dissolved in a solvent, and uniformly dispersed therein by stirring or the like, the dispersion is coated on PET, and the solvent is removed by drying, so that the thickness thereafter is about 10 to 500 µm.

When a substance is dispersed in a polymer, the substance or an aggregate thereof in the polymer can be considered as an immiscible substance with the polymer if it can be approximated as a globular form such as a shpere, a cube or an undefined form and the globular substance or an aggregate thereof has a diameter of 5 nm or more, and the substance or an aggregate thereof in the polymer can be considered as an immiscible substance with the polymer if it can be approximated as a columnar form such as a rod form, a laminar form or a rectangular parallelepiped form and the length of the longest side of the columnar substance or an aggregate thereof is 10 nm or more.

Examples of the inorganic substance as the immiscible substance (f) include inorganic particles (fine particles and particulate powders) that will be described below.

Particles as the immiscible substance can contribute to formation of surface irregularities by particles in the immiscible substance-eccentrically located portion (A21) of the first cured layer (A2) in a cured multilayer sheet using particles as the immiscible substance, and can contributed to formation of an irregular structure on the usage surface of a surface-irregular sheet. Examples of the particles include inorganic particles such as silica, silicone (silicone powder), calcium carbonate, clay, titanium oxide, talk, layered silicate, clay minerals, metal powders (for example, nickel powder, aluminum powder, iron powder, magnesium powder, copper powder, etc.), barium titanate, boron nitride, silicon nitride, aluminum nitride, glass, glass beads, glass balloons, alumina balloons, ceramic balloons, titanium white and carbon black; organic particles such as polyester beads, nylon beads, silicon beads, urethane beads, vinylidene chloride beads and acryl balloons; resin particles such as crosslinked acryl particles, crosslinked styrene particles, melamine resin particles, benzoguanamine resins and nylon resins; and inorganic-organic hybrid particles and heat expandable microspheres. The particle may be any of a solid body or hollow body (balloon). The particles may be used alone or in combination of two or more kinds.

Examples of the heat-expandable microsphere include a microcapsule constituted such that a substance which is easily gasified to show a heat expandability is included in a shell made of a shell forming substance. Examples of the substance showing a heat expandability include substances which are easily gasified, such as isobutane, propane and pentane. Examples of the shell forming substance include heat-meltable substances such as vinylidene chloride-acrylonitrile copolymers, polyvinyl alcohol, polyvinyl butyral, polymethyl methacrylate, polyacrylonitrile, polyvinylidene chloride and polysulfone, and substances that are collapsed by heat expansion. Examples of the method for including a heat-expandable substance in a shell include methods such as a coacervation method and an interfacial polymerization method. The heat-expandable microspheres also include commercially available products such as MICROSPHERE (trade name; manufactured by Matsumoto Yushi-Seiyaku Co., Ltd.).

The particle diameter (average particle diameter) of particles is not particularly limited, but is preferably 0.5 to 500 µm, further preferably 1 to 300 µm, still further preferably 3 to 100 µm in terms of a median diameter in a laser scattering method and a dynamic light scattering method. Particles may be used in combination of two or more kinds of particles having different particle diameters.

The shape of particles may be any of a globular form such as a spherical form or an oval form, an undefined form, an acicular form, a rod form, a flat plate form and the like. Generally, particles are preferably those that are spherical or have a high sphericity close to that of a spherical form such that the shapes of the irregular structure of surface irregularities by particles on the surface of the immiscible substance-eccentrically located portion (A21) of the first cured layer (A2) and the irregular structure of the usage surface of the surface-irregular sheet are easily uniformalized. Particles may have pores and projections on their surfaces. Particles having only one kind of shape may be selected and used, or two or more kinds of particles having different shapes may be used in combination.

The surface of the particle may be subjected to various kinds of surface treatments (for example, surface tension reducing treatment with a silicone-based compound, a fluorine-based compound and the like).

Examples of the organic substance as the immiscible substance include polymers such as an acryl-based polymer, polyester, polyurethane, polyether, a fluorine-based resin, silicone, natural rubber and synthetic rubber [particularly, synthetic rubbers containing styrene components, such as styrene-isoprene-styrene rubber (SIS), styrene-isobutylene-styrene rubber (SIBS), styrene-butadiene-styrene rubber (SBS) or styrene-ethylene-butylene-styrene rubber (SEBS)] and oligomers thereof; tackifiers (tackifier resins) such as a rosin-based tackifier resin, a terpene-based tackifier resin, a phenol-based tackifier resin, a hydrocarbon-based tackifier resin, a ketone-based tackifier resin, a polyamide-based tackifier resin, an epoxy-based tackifier resin and an elastomer-based tackifier resin; liquids such as a surfactant, an antioxidant, an organic pigment, a plasticizer and a solvent (organic solvent). Further, water and aqueous solutions (for example, aqueous salt solutions and aqueous acid solutions) are also used as the immiscible substance. The organic substance can be used as particles.

In the present invention, the immiscible substance (f) is eccentrically distributed in a layered form near an interface on the side opposite to the second cured layer (B2) in the first cured layer (A2) in the cured multilayer sheet. The thickness of such a portion (the layered distribution portion) associated with the immiscible substance-eccentrically located portion (A21) in which the immiscible substance (f) is distributed can be controlled by adjusting the amount of immiscible substance used.

The first curable resin composition (a) contains the polymerizable monomer (m1) and the immiscible substance (f), and the ratio thereof is not particularly limited, but the ratio of the immiscible substance (f) is preferably 0.001 to 100 parts by weight, further preferably 0.01 to 70 parts by weight, still further preferably 0.1 to 50 parts by weight based on 100 parts by weight of polymerizable monomer (m1) or partial polymer thereof. If the used amount is such that the ratio of the immiscible substance (f) is more than 100 parts by weight, preparation of the cured multilayer sheet may be difficult and a problem with the strength may occur in the cured multilayer sheet after preparation. If the used amount is less than 0.001 parts by weight, it becomes difficult to obtain the first diffusion layer (A1) and hence the first cured layer (A2) even after obtaining the laminated body (X) in the laminating step (1).

The polymerization initiator can be used as required. The polymerization initiator can be selected from, for example, a thermal polymerization initiator and a photopolymerization initiator depending on the curing step (2), and used. If the polymerization initiator is used, the polymerizable monomer (m1) and the polymerizable monomer (m2) in the first diffusion layer (A1) and the second diffusion layer (B1) can easily be cured while retaining an eccentric structure of the first diffusion layer (A1) formed by the laminating step (1) and having the immiscible substance-eccentrically located portion (A11) and the immiscible substance-absent portion (A12).

The photopolymerization initiator is not particularly limited, and for example a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a thioxanthone-based photopolymerization initiator and the like can be used. The photopolymerization initiator can be used alone or in combination of two or more kinds.

Specifically, examples of the ketal-based photopolymerization initiator include 2,2-dimethoxy-1,2-diphenylethane-1-one [for example, trade name: "Irgacure 651" (manufactured by Ciba Specialty Chemicals Inc.) and the like]. Examples of the acetophenone-based photopolymerization initiator include 1-hydroxycyclohexyl phenyl ketone [for example, trade name: "Irgacure 184" (manufactured by Ciba Specialty Chemicals Inc.) and the like], 2,2-diethoxyacetophenone, 2,2-dimethoxy-2-phenylacetophenone, 4-phenoxydichloroacetophenone and 4-(t-butyl)dichloroacetophenone. Examples of the benzoin ether-based photopolymerization initiator include benzoin methylether, benzoin ethyl ether, benzoin propylether, benzoin isopropylether and benzoin isobutylether. As an acyl phosphine oxide-based photopolymerization initiator, for example "Lucirin TPO"(trade name) (manufactured by BASF Corporation) can be used. Examples of the α-ketol-based photopolymerization initiator include 2-methyl-2-hydroxypropiophenone and 1-[4-(2-hydroxyethyl)phenyl]-2-methylpropane-1-one. Examples of the aromatic sulfonyl chloride-based photopolymerization initiator include 2-naphthalenesulfonyl chloride. Examples of the photoactive oxime-based photopolymerization initiator include 1-phenyl-1,1-propanedione-2-(o-ethoxycarbonyl)-oxime. Examples of the benzoin-based photopolymerization initiator include benzoin. Examples of the benzyl-based photopolymerization initiator include benzyl. Examples of the benzophenone-based photopolymerization initiator include benzophenone, benzoyl benzoic acid, 3,3'-dimethyl-4-methoxy benzophenone, polyvinyl benzophenone and α-hydroxycyclohexyl phenyl ketone. Examples of the thioxanthone-based photopolymerization initiator include thioxanthone, 2-chlororthioxanthone, 2-methylthioxanthone, 2,4-dimethylthioxanthone, isopropylthioxanthone, 2,4-diisopropylthioxanthone and dodecylthioxanthone.

The amount of photopolymerization initiator used is not particularly limited, but is, for example, preferably 5 parts by weight or less, further preferably 0.01 to 5 parts by weight, still further preferably 0.05 to 3 parts by weight, based on 100 parts by weight of polymerizable monomer (m1) or partial polymer thereof in the first curable resin composition (a).

Examples of the thermal polymerization initiator include azo-based polymerization initiators [for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobisisovaleronitrile, 2,2'-azobis(2-amidinopropane)dihydrochloride, 2,2'-azobis[2-(5-methyl-2-imidazoline-2-yl)propane]dihydroc hloride, 2,2'-azobis(2-methylpropioneamidine) disulfate and 2,2'-azobis(N,N'-dimethyleneisobutylamidine)dihydrochloride ], peroxide-based polymerization initiators (for example, dibenzoyl peroxide and tert-butyl permaleate), and redox-based polymerization initiators (for example, combinations of organic peroxide/panadium compound; organic peroxide/dimethylaniline; naphthenic acid metal salt/butylaldehyde, aniline or acetylbutyrolactone). The amount of thermal polymerization initiator used is not particularly limited, and may be in any range as long as it can be used as a thermal polymerization initiator. If a redox-based polymerization initiator is used as a thermal polymerization initiator, polymerization can be performed at ordinary temperature. The amount of thermal polymerization initiator used is not particularly limited, but is, for example, preferably 5 parts by weight or less, further preferably 0.01 to 5 parts by weight, still further preferably 0.05 to 3 parts by weight, based on 100 parts by weight of polymerizable monomer (m1) or partial polymer thereof in the first curable resin composition (a).

The first curable resin composition (a) may contain appropriate additives as required. These additive include, for example, surfactants (for example, ionic surfactants, silicone-based surfactants and fluorine-based surfactants), crosslinkers (for example, polyisocyanate-based crosslinkers, silicone-based crosslinkers, epoxy-based crosslinkers and alkyl etherified melamine-based crosslinkers), plasticizers, fillers, anti-aging agents, antioxidants, colorants (pigments, dyes, etc.) and solvents (organic solvents).

For example, from the viewpoint of design and optical properties and the like of the first cured layer (A2), a pigment (coloring pigment) can be used within the bounds of not hindering a polymerization reaction such as a photopolymerization reaction. If the black color is desired, carbon black can be used as a coloring pigment. The amount of carbon black used is, for example, preferably 0.15 parts by weight or less, further preferably 0.001 to 0.15 parts by weight, still further preferably 0.02 to 0.1 parts by weight, based on 100 parts by weight of polymerizable monomer of the first curable resin composition (a) or partial polymer thereof, from the viewpoint of a degree of pigmentation and prevention of hindrance of the photopolymerization reaction.

The first curable resin composition (a) can be prepared by uniformly mixing/dispersing the above-mentioned components. The first curable resin composition (a) is normally formed into a sheet by coating it on a substrate or the like, and therefore preferably has a moderate viscosity suitable for coating operations. The viscosity of the first curable resin composition (a) can be adjusted by, for example, blending various kinds of polymers such as acrylic rubber and a thickening additive or forming the polymerizable monomer (m1) in the first curable resin composition (a) into a partial polymer partially polymerized by irradiation of light, heating or the like. The desirable viscosity is 5 to 50 Pa·s, more preferably 10 to 40 Pa·s as a viscosity established under conditions of a rotor: No. 5 rotor; speed of rotation: 10 rpm; and measurement temperature: 30°C using a BH viscometer. If the viscosity is less than 5 Pa·s, the liquid flows away when the composition is coated on the substrate, and if the viscosity is more than 50 Pa·s, the viscosity is so high that coating becomes difficult.

### (Second Curable Resin Composition (b))

The second curable resin composition (b) contains a polymerizable monomer (m2) and a polymer (p2).

For the polymerizable monomer (m2), one that is compatible with the polymerizable monomer (m1) and is not compatible with the immiscible substance (f) is used. Examples of the polymerizable monomer (m2) may include those similar to the polymerizable monomer (m1). From the viewpoint of compatibility, when one or more kinds of the polymerizable monomer (m2) are used, at least one kind of the polymerizable monomer (m2) is preferably the same as at least one of one or more kinds used in the polymerizable monomer (m1). The polymerizable monomer (m2) is preferably a (meth)acryl-based monomer like the polymerizable monomer (m1), and is preferably one that forms a pressure-sensitive adhesive composition layer after curing.

The second curable resin composition (b) contains the polymer (p2) in addition to the polymerizable monomer (m2). The polymer (p2) is preferably compatible with the polymerizable monomer (m1) from the viewpoint of diffusion of the polymer (p2), and various kinds of polymers that are not compatible with the immiscible substance (f) are used. The polymer (p2) may be the same as or different from the polymer (p1) obtained from the polymerizable monomer (m1), but the polymer (p2) being different from the polymer (p1) is preferable from the viewpoint of a function as a cured multilayer sheet.

As the polymer (p2), for example, a polymer of the polymerizable monomer (m2) and/or a polymerizable polymer can be used. When the second curable resin composition (b) contains a polymer of the polymerizable monomer (m2) in addition to the polymerizable monomer (m2), a partial polymerization composition obtained by polymerizing a part of the polymerizable monomer (m2) can suitably be used for the second curable resin composition (b). On the other hand, when the second curable resin composition (b) contains a polymerizable polymer in addition to the polymerizable monomer (m2), the second curable resin composition (b) is prepared by blending the polymerizable polymer with the polymerizable monomer (m2). In addition, examples of the polymer (p2) may include polymers other than the polymer of the polymerizable monomer (m2), but when such a polymer is used, the second curable resin composition (b) is prepared by blending the polymer in addition to the polymerizable monomer (m2).

The second curable resin composition (b) contains the polymerizable monomer (m2) and the polymer (p2), but the concentration (c2) of the polymerizable monomer (m2) based on the polymerizable monomer (m2) and the polymer (p2) is preferably controlled to 1 to 85% by weight. The concentration (c2) is preferably 15 to 80% by weight, further preferably 25 to 75% by weight. As described above, the concentration (c1) associated with the first curable resin composition (a) is set to be higher than the concentration (c2) associated with the second curable resin composition (b), and preferably set to be higher by 15% by weight or more.

As the polymerizable monomer, a polymer and an oligomer that can be polymerized utilizing light energy or heat energy are used regardless of the reaction mechanism such as radical polymerization or cationic polymerization. Examples of the polymerizable polymer include an urethane (meth)acrylate obtained by an addition reaction of a hydroxyl group-containing (meth)acryl-based monomer with an urethane polymer, the urethane polymer being obtained by an addition reaction of a polyol component with a polyisocyanate component; a poly(meth)acryl(meth)acrylate obtained by introducing a (meth)acryloyl group as a pendant group into a copolymerized (meth)acryl polymer obtained by polymerizing a (meth)acryl-based monomer and a vinyl monomer; an epoxy (meth)acrylate obtained by an addition reaction of an epoxy compound with a (meth)acrylic acid; an unsaturated polyester obtained by combination of diol with an unsaturated dibasic acid such as fumaric acid or maleic acid; and a hyperbranched polymer and a vinyl ether compound. Above all, the urethane (meth)acrylate is suitably used. The polymerizable polymer may be used alone or in combination of two or more kinds.

For the urethane (meth)acrylate, an urethane (meth) acrylate prepared in a (meth)acryl-based monomer can also be directly used as the second curable resin composition (b). Generally, commercially available urethane (meth)acrylates have a high viscosity and a poor handling property, and therefore are often diluted with a solvent or the polymerizable monomer (m2) and used. According to this method, dilution with a solvent or the polymerizable monomer (m2) is not required, and compatibility with a (meth)acryl-based monomer and the properties of the sheet can be changed at will because the urethane (meth)acrylate is prepared in the (meth)acryl-based monomer. Specific methods include a method in which an urethane polymer is prepared by carrying out an addition reaction of a polyol with a polyisocyanate in a (meth)acryl-based monomer, and a hydroxyl group-containing acryl monomer or the like is subjected to an addition reaction with the urethane polymer to prepare an urethane (meth)acrylate.

The urethane polymer is obtained by reacting a polyol with a polyisocyanate. A catalyst may be used for the reaction of the hydroxyl group of the polyol with the polyisocyanate. For example, catalysts generally used in an urethane reaction, such as dibutyltin dilaurate, tin octoate and 1,4-diazabicyclo(2,2,2)octane can be used.

As the polyol, one having two or more hydroxyl groups per molecule is desirable. Low-molecular polyols include dihydric alcohols such as ethylene glycol, diethylene glycol, propylene glycol, butylene glycol and hexamethylene glycol, and trihydric or tetrahydric alcohols such as trimethylolpropane, glycerin and pentaerythritol. High-molecular polyols include polyether polyols, polyester polyols, acryl polyols, epoxy polyols, carbonate polyols and caprolactone polyols. Among them, polyether polyols, polyester polyols and carbonate polyols are preferable. Polyether polyols include polyethylene glycol, polypropylene glycol and polytetramethylene glycol. Polyester polyols include polycondensates of alcohols such as the above-mentioned dihydric alcohol, dipropylene glycol, 1,4-butanediol, 1, 6-hexanediol and neopentyl glycol with dibasic acids such as adipic acid, azelaic acid and sebacic acid. In addition, there are lactone-based ring-opening polymer polyol polycarbonate diols such as polycaprolactone. Acryl polyols include copolymers of hydroxyl group-containing (meth)acryl-based monomers such as 2-hydroxyethyl (meth)acrylate and 2-hydroxypropyl (meth)acrylate, and copolymers of hydroxyl group-containing (meth)acryl-based monomers with other (meth)acryl-based monomers. Epoxy polyols include amine-modified epoxy resins. These polyols can be used alone or in combination.

Polyisocyanates include aromatic, aliphatic and alicyclic diisocyanates, and dimers and trimers of these diisocyanates. Aromatic, aliphatic and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatemethyl)cyclohexane, methylcyclohexane diisocyanate and m-tetramethylxylylene diisocyanate. In addition, dimers and trimers thereof, and polyphenylmethane polyisocyanates are used. Trimers include an isocyanurate type, a burette type and an allophanate type, and they can be appropriately used. These polyisocyanates can be used alone or in combination. The type, combination and the like of the polyisocyanate can be appropriately selected from the viewpoint of urethane reactivity, compatibility with a polymerizable monomer and the like.

The amounts of polyol component and polyisocyanate component used for forming an urethane polymer are not particularly limited but, for example, the amount of polyol component used is preferably 0.8 to 3.0, further preferably 1.0 to 2.0 in terms of NCO/OH (equivalent ratio) to the polyisocyanate component. If NCO/OH is less than 0.8 or more than 3.0, the molecular weight may easily decrease, so that a functional multilayer sheet intended by the present invention may not be obtained.

It is preferable to add a hydroxyl group-containing (meth)acryl-based monomer to the urethane polymer to have an acryloyl group at the end of the polymer. By adding a hydroxyl group-containing (meth) acryl-based monomer, an acryloyl group can be introduced into a molecule of the urethane polymer, so that copolymerizability with an acryl-based monomer can be imparted. As the hydroxyl group-containing (meth) acryl-based monomer, 2-hydroxyethyl (meth)acrylate, 2-hydroxypropyl (meth)acrylate, 4-hydroxybutyl (meth)acrylate, 6-hydroxyhexyl (meth)acrylate and the like as described as examples in the polymerizable monomer (m1) are used. The amount of hydroxyl group-containing (meth) acryl-based monomer used is preferably 0.1 to 10 parts by weight, further preferably 0.1 to 5 parts by weight, based on 100 parts by weight of urethane polymer.

The second curable resin composition (b) can use polymerization initiators and additives as described as examples in the first curable resin composition (a) in a range similar to that for the first curable resin composition (a). However, the used amount is based on the polymerizable monomer (m2) and the polymer (p2).

### <<Laminated Body (X)>>

The method for preparing the laminated body (X) is not particularly limited, but examples thereof include (I) a method in which the first curable resin composition (a) and the second curable resin composition (b) are coated on a support substrate at once by a multilayer die to form the first uncured layer (A) and the second uncured layer (B) at once; (II) a method in which the first curable resin composition (a) or the second curable resin composition (b) is coated on a support substrate to form the first uncured layer (A) or the second uncured layer (B), followed by coating the layer with the second curable resin composition (b) or the first curable resin composition (a) associated with a layer different from the aforementioned layer to form the second uncured layer (B) or the first uncured layer (A) ; (III) a method in which the first curable resin composition (a) and the second curable resin composition (b) are coated on different support substrates, respectively, to form the first uncured layer (A) and the second uncured layer (B), followed by laminating the layers together to form a laminate; and the like.

The method (I) is so called a coextrusion method, by which the first curable resin composition (a) and the second curable resin composition (b) can be concurrently extruded to simultaneously form the first uncured layer (A) and the second uncured layer (B) at once in such a manner as to be adjacent to each other. The coextrusion method can be carried out in accordance with an inflation method, a T-die method or the like while feeding the first curable resin composition (a) and the second curable resin composition (b), respectively, using an extrusion molding machine and a die for coextrusion.

For coating the first curable resin composition (a) and the second curable resin composition (b), in the methods (II) and (III), for example a conventional coater (for example, comma roll coater, die roll coater, gravure roll coater, reverse roll coater, kiss roll coater, dip roll coater, bar coater, knife coater or spray coater) can be used.

The curing step (2) may be carried out immediately after the first uncured layer (A) and the second uncured layer (B) are laminated by the methods (I) to (III) and the like, but a standing step for leaving each laminated layer as it is may be provided between the laminating step (1) and the curing step (2) as required. The standing time at this time is not particularly limited, but is preferably 10 to 500 seconds, more preferably 60 to 300 seconds.

### (First Uncured Layer (A) and Second Uncured Layer (B))

The thickness of each of the first uncured layer (A) and the second uncured layer (B) is not particularly limited, but is, for example, 20 to 2000 µm, preferably 30 to 1500 µm, further preferably 50 to 1000 µm. The thickness of the first uncured layer (A) may be the same as or different from the thickness of the second uncured layer (B). The thickness of the laminated body (X) constituted by laminating the first uncured layer (A) and the second uncured layer (B) is not particularly limited, but is, for example, 20 to 3000 µm, preferably 30 to 2000 µm, further preferably 50 to 1000 µm.

### (Support Substrate)

The support substrate for use in preparation of the laminated body (X) may or may not have a peeling property. In the cured multilayer sheet obtained, the surface of the first cured layer (A2) obtained from the first uncured layer (A) and the surface of the first cured layer (B2) obtained from the second uncured layer (B) may be protected by the support substrate.

For the support substrate, one that does not hinder transmission of active energy rays is preferably used, for example, when active energy rays are used in the curing step (2). The surface of the support substrate may be subjected to a conventional surface treatment, for example, an oxidizing treatment by a chemical or physical method such as a corona treatment, a chromic acid treatment, exposure to ozone, exposure to a flame, exposure to a high-pressure electric shock or an ionized radiation treatment, and may be subjected to a coating treatment with a primer, a peeling agent or the like.

The thickness of the support substrate can be appropriately selected according to the strength, flexibility and intended use, and is, for example, generally 1 to 1000 µm, preferably 1 to 500 µm, further preferably about 3 to 300 µm, but is not limited thereto. The substrate may have any of monolayer and laminated forms.

When a cured multilayer sheet is used, the support substrate may be peeled, or may remain in its original state without being peeled, and constitute a part of the cured multilayer sheet. When a photopolymerization method is used, in the present invention, the reaction is hindered by oxygen in the air, and therefore it is preferable to block oxygen in the air using a cover film as the support substrate in the curing step (2).

This cover film is not particularly limited as long as it is a thin sheet resistant to transmission of oxygen, but is preferably transparent when a photopolymerization reaction is used, and for example a conventional releasing paper can be used. Specifically, as the cover film, for example, a substrate having a release treatment layer (peeling treatment layer) by a release treatment agent (peeling treatment agent) on at least one surface, and also a low-tackiness substrate made of a fluorine-based polymer (for example, polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer), a low-tackiness substrate made of a non-polar polymer (for example, olefin-based resins such as polyethylene and polypropylene), and the like can be used. In the low-tackiness substrate, both surfaces can be used with a release surface, while in the substrate having a release treatment layer, the surface of the release treatment layer can be used as a release surface (release treatment surface).

As the cover film, for example, a cover film with a release treatment layer formed on at least one surface of a substrate for a cover film (substrate having a release treatment layer) may be used, or a substrate for a cover film may be used directly.

The substrates for a cover film include plastic-based substrate films (synthetic resin films) such as a polyester film, (such as polyethylene terephthalate film), an olefin-based film (such as polyethylene film and polypropylene film), a polyvinyl chloride film, a polyimide film, a polyamide film (nylon film) and a rayon film, papers (such as woodfree paper, Japanese paper, kraft paper, glassine paper, synthetic paper and topcoat paper), and also multi-layered structures formed by laminating or extruding the above-mentioned substrates (composites having two to three layers). As the substrate for a cover film, a substrate for a cover film prepared using a highly transparent plastic-based substrate film (particularly polyethylene terephthalate film) can suitably be used.

The release treatment agent is not particularly limited, and for example, a silicone-based release treatment agent, a fluorine-based release treatment agent, a long-chain alkyl-based release treatment agent and the like can be used. The release treatment agent may be used alone or in combination of two or more kinds. The cover film subjected to a release treatment by a release treatment agent is formed by, for example, a known formation method.

### [Curing Step (2)]

In the present invention, the step (3) for curing the polymerizable monomer (m1) and polymerizable monomer (m2) in the first diffusion layer (A1) and second diffusion layer (B1), and further curing a polymerizable polymer if the polymer (p2) includes the polymerizable polymer is performed to obtain the laminated body (Y) of the first cured layer (A2) and the second cured layer (B2), namely a cured multilayer sheet. The curing step (2) can be carried out by, for example, light irradiation. Light irradiation is not particularly limited for a light source, irradiation energy, an irradiation method, irradiation time and the like as long as the polymerizable monomer (m1), polymerizable monomer (m2) and polymerizable polymer (p2) can be polymerized.

Examples of active energy rays used for light irradiation include ionizing radiations such as α-rays, β-rays, γ-rays, neutron rays and electron rays, and ultraviolet rays; and particularly, ultraviolet rays are preferred. Irradiation energy, irradiation time, the irradiation method and the like for active energy rays are not particularly limited as long as the polymerizable monomers (m1) and (m2) and polymerizable polymer (p2) can be polymerized.

The device for irradiation of active energy rays is not particularly limited, but examples thereof include a fluorescent chemical lamp, a black light lamp, a bactericidal lamp, a chemical lamp, a high-pressure mercury lamp, a metal halide lamp, a LED lamp and an EB irradiation device.

The curing step (2) can also be carried out by heating. The method for heating can be appropriately selected from, for example, known heating methods (for example, a heating method using an electric heater and a heating method using an electromagnetic wave such as infrared-rays).

### [Cured Multilayer Sheet]

In the first cured layer (A2) of the laminated body (Y), the thickness at an interface or near the interface where the immiscible substance (f) is eccentrically located (immiscible substance-eccentrically located portion: A21) is preferably 80% or less of the thickness of the first uncured layer (A) (before lamination).

The thickness of the immiscible substance-eccentrically located portion (A21) is preferably 80% or less, further preferably 60% or less, still further preferably 50% or less, in terms of a thickness ratio to the thickness of the first uncured layer (A). If the thickness is more than 80%, there may arise a problem with adhesion with the second cured layer (B2), and there may arise a problem with the strength of the first cured layer (A2). The thickness of the immiscible substance-eccentrically located portion (A21) in the first cured layer (A2) can be controlled by adjusting the amount of the immiscible substance (f) included in the first curable resin composition (a), or the like.

In the first cured layer (A2), the immiscible substance (f), the polymerizable monomer (m1), the polymerizable monomer (m2), and further a polymer component formed by curing of the polymer (p2) coexist in the immiscible substance-eccentrically located portion (A21). Thus, in such a portion, properties based on the polymer component, properties that are originally possessed by the immiscible substance (f), and properties based on eccentric location of the immiscible substance (f) can be exhibited.

Properties based on the polymer component of the first cured layer (A2) include flexibility, a hard coating property, adherability, a stress relaxation property and impact resistance. In addition, mention is made of, for example, adherability (pressure-sensitive tackiness) when using a pressure-sensitive adhesive component as the polymer component. Properties that are originally possessed by the immiscible substance (f) include specific functions when using the immiscible substance having the specific functions (for example, expandability, shrinkability, absorptivity, divergence and conductivity). Properties based on eccentric location of the immiscible substance (f) include, for example, control of adherability (pressure-sensitive tackiness) by adjusting the content of the immiscible substance (f) when a pressure-sensitive adhesive component is used as the polymer component, design such as pigmentation, impartment of surface irregularities when particles are used as the immiscible substance and properties based on the surface irregularities (for example, a re-peeling property, an anti-blocking property, an anti-glare property, design and a light scattering property) and the like. In addition, mention is made of possession of properties of the substrate, for example, flexibility, a hard coating property, adherability, a stress relaxation property and impact resistance while retaining expandability, shrinkability, absorptivity, divergence and conductivity.

The form of the cured multilayer sheet is not particularly limited, and it is normally in the form of a sheet or a tape. When the pressure-sensitive adhesive layer (pressure-sensitive adhesive layer) is formed as the first cured layer (A2) and/or the second cured layer (B2), the cured multilayer sheet can be used as a pressure-sensitive adhesive tape or sheet ("tape or sheet" is referred to simply as "tape" or "sheet" in some cases). Both the first cured layer (A2) and the second cured body (B2) can be formed as pressure-sensitive adhesive layers, or any one thereof can be formed as a substrate layer. Specifically, a double-sided pressure-sensitive adhesive tape of pressure-sensitive adhesive layer/pressure-sensitive adhesive layer, a single-sided pressure-sensitive adhesive tape of substrate layer/pressure-sensitive adhesive layer, a double-sided pressure-sensitive adhesive tape of pressure-sensitive adhesive layer/substrate/pressure-sensitive adhesive layer and the like can be prepared as the cured multilayer sheet.

The cured multilayer sheet can also be used as a pressure-sensitive adhesive tape or sheet by providing the cured multilayer sheet with a pressure-sensitive adhesive layer (pressure-sensitive adhesive layer) by a known pressure-sensitive adhesive (pressure-sensitive adhesive) (for example, acryl-based pressure-sensitive adhesive, rubber-based pressure-sensitive adhesive, vinyl alkyl ether-based pressure-sensitive adhesive, silicone-based pressure-sensitive adhesive, polyester-based pressure-sensitive adhesive, polyamide-based pressure-sensitive adhesive, urethane-based pressure-sensitive adhesive, fluorine-based pressure-sensitive adhesive and epoxy-based pressure-sensitive adhesive).

The cured multilayer sheet may have other sheets (for example, middle layer and undercoat layer) within the bounds of not impairing the effect of the present invention.

The cured multilayer sheet of the present invention exhibits a variety of properties by adjusting the type and amount of the immiscible substance and the type and thickness of the polymer of the first cured layer (A2), and therefore can be used in a wide range of fields. The cured multilayer sheet obtained by the production method of the present invention can be used as various kinds of members that are applied to various kinds of applications by making a selection of the immiscible substance. For example, when particles are used as the immiscible substance, the cured multilayer sheet is suitably used as a surface irregular member provided on the surface with irregularities resulting from the particles. Further, when the first cured layer (A2) is a pressure-sensitive adhesive layer, and heat-expandable microspheres are used as the immiscible substance, the cured multilayer sheet is suitably used as, for example, a heat-peelable pressure-sensitive adhesive sheet for use in steps of processing electronic components and semiconductor components. For example, when a gas barrier substance is used as the immiscible substance, the cured multilayer substance is suitably used as a gas barrier member. Particularly, it is suitable for a gas barrier member for a water vapor gas barrier and an oxygen gas barrier. When the immiscible substance has flame retardancy, the cured multilayer sheet is suitably used as a flame-retardant member. In addition, when a substance having a surface protecting function, such as a fluorine-based resin or silica particles is used as the immiscible substance, the cured multilayer sheet is suitably used as, for example, a surface protecting member for a coating film of a vehicle and the like. By forming the cured layer by a pressure-sensitive adhesive layer, the cured multilayer sheet is used as a pressure-sensitive adhesive tape or sheet. In addition, the cured multilayer sheet of the present invention is used for a conductive member, a light diffusion member and the like. Therefore, the cured multilayer sheet obtained by the production method of the present invention can suitably be used in applications of, for example, optical sheets, barrier sheets, flame-retardant sheets, electronic circuits, power electronic materials, adhesive tapes or sheets and medical fields.

### EXAMPLES

Hereinbelow, the present invention will be described more in detail based on Examples, but the present invention is not limited to the Examples.

In each of Examples below, a biaxially oriented polyethylene terephthalate film having a thickness of 38 µm, one surface of which was subjected to a silicone-based release treatment (trade name "MRN 38" manufactured by Mitsubishi Chemical Polyester Film Co.) was used.

### (Production Example 1: Preparation of Second Curable Resin Composition (b))

In a four-necked flask equipped with a stirrer, a thermometer, a nitrogen gas inlet and a cooling pipe, 100 parts by weight of butyl acrylate (hereinafter abbreviated as BA), 0.1 parts by weight of 2,2-dimethoxy-1,2-diphenylethane-1-one (trade name "Irgacure 651" (manufactured by Ciba Specialty Chemicals Inc.) and 0.17 parts by weight of lauryl mercaptan as a chain transfer agent were stirred until being homogeneous, and the mixture was bubbled with a nitrogen gas for an hour to remove dissolved oxygen. Thereafter, ultraviolet rays were applied from outside the flask by a black light lamp, and when an appropriate viscosity was achieved, the lamp was turned off and blowing of nitrogen was stopped, and the mixture was partially photopolymerized (polymer concentration: 67% by weight) to thereby obtain a composition containing a BA prepolymer (hereinafter the composition will be referred to as syrup (s1)). To 100 parts by weight of syrup (s1) was added 45 parts by weight of BA to prepare a composition having a BA prepolymer concentration of 46% (hereinafter the composition will be referred to as syrup (b1)). The concentration of BA based on the syrup (b1) is 54% by weight.

### (Production Example 2: Preparation of Second Curable Resin Composition (b))

To 100 parts by weight of syrup (s1) was added 120 parts by weight of BA to prepare a composition having a BA prepolymer concentration of 30% (hereinafter the composition will be referred to as syrup (b2)). The concentration of BA based on the syrup (b2) is 70% by weight.

### (Production Example 3: Preparation of Second Curable Resin Composition (b))

To 100 parts by weight of syrup (s1) was added 14 parts by weight of BA to prepare a composition having a BA polymer concentration of 59% (hereinafter the composition will be referred to as syrup (b3)). The concentration of BA based on the syrup (b3) is 41% by weight.

### (Production Example 4: Preparation of Second Curable Resin Composition (b))

Into a reaction vessel equipped with a cooling pipe, a thermometer and a stirrer were charged 80 parts by weight of isobornyl acrylate and 20 parts by weight of BA as (meth)acryl-based monomers, and 68.4 parts by weight of poly(oxytetramethylene)glycol having a number average molecular weight of 650 (PTMG 650 manufactured by Mitsubishi Chemical Corporation) as a polyol and 0.01 parts by weight of dibutyltin dilaurate as a catalyst. Then, 25. 5 parts by weight of hydrogenated xylylene diisocyanate (manufactured by Mitsui Chemicals Polyurethanes, Inc.) were added dropwise with stirring, and the mixture was reacted at 65°C for 5 hours to obtain an urethane polymer-acryl-based monomer mixture. Thereafter, further 6.1 parts by weight of 2-hydroxyethyl acrylate were charged, and the mixture was reacted at 65°C for an hour to obtain an acryloyl group-terminated urethane polymer-acryl-based monomer mixture. Further, 0.3 parts by weight of 2,2-dimethoxy-1,2-diphenylethane-1-one (trade name "Irgacure 651" (manufactured by Ciba Specialty Chemicals Inc.) were added as a photopolymerization initiator to obtain a composition (hereinafter the composition will be referred to as syrup (b4)). The amount of the polyisocyanate component and polyol component used is NCO/OH (equivalent ratio) = 1.25, the concentration of the urethane polymer based on the syrup (b4) is 50% by weight, and the concentration of the (meth)acryl-based monomer is 50% by weight.

### (Production Example 5: Preparation of Second Curable Resin Composition (b))

In a four-necked flask equipped with a stirrer, a thermometer, a nitrogen gas inlet and a cooling pipe, 100 parts by weight of BA and 0.1 parts by weight of 2,2-dimethoxy-1,2-diphenylethane-1-one (trade name "Irgacure 651" (manufactured by Ciba Specialty Chemicals Inc.) were stirred until being homogeneous, and the mixture was bubbled with a nitrogen gas for an hour to remove dissolved oxygen. Thereafter, ultraviolet rays were applied from outside the flask by a black light lamp, and when an appropriate viscosity was achieved, the lamp was turned off and blowing of nitrogen was stopped, and the mixture was partially photopolymerized (polymer concentration: 11% by weight) to thereby obtain a composition containing a BA prepolymer (hereinafter the composition will be referred to as syrup (b5)). The concentration of BA based on the syrup (b5) is 89% by weight.

### (Production Example 6: Preparation of First Curable Resin Composition (a))

To 100 parts by weight of syrup (b5) were added 20 parts by weight of spherical particles of crosslinked polymethyl methacrylate having an average particle diameter of 8 µm (trade name "SSX-108" manufactured by Sekisui Plastics Co., Ltd.), and the mixture was homogeneously mixed to prepare a composition (hereinafter the composition is referred to as syrup (a1)). In the syrup (a1), the concentration of BA based on the syrup (b5) is 89% by weight.

### (Production Example 7: Preparation of Second Curable Resin Composition (b))

Into a reaction vessel equipped with a cooling pipe, a thermometer and a stirrer were charged 50 parts by weight of butyl acrylate (BA), 40 parts by weight of isobornyl acrylate (IBXA) and 10 parts by weight of acrylic acid (AA) as (meth)acryl-based monomers, and 60.7 parts by weight of a copolymer of 1,6-hexane carbonate diol and 1,5-pentane carbonate diol having a number average molecular weight of 500 (trade name "Duranol T5650 J" manufactured by Asahi Kasei Chemicals Corporation) as a polyol. Then, 30.8 parts by weight of hydrogenated xylylene diisocyanate (HXDI, manufactured by Mitsui Chemicals Polyurethanes, Inc.) was added dropwise with stirring, and the mixture was reacted at 65°C for 5 hours to obtain an urethane polymer-acryl-based monomer mixture. Thereafter, further 8.5 parts by weight of hydroxyethyl acrylate (HEA) was charged, and the mixture was reacted at 65°C for an hour to obtain an acryloyl group-terminated urethane polymer-acryl-based monomer mixture. Further, 0.3 parts by weight of 2,2-dimethoxy-1,2-diphenylethane-1-one (trade name "Irgacure 651" (manufactured by Ciba Specialty Chemicals Inc.) was added as a photopolymerization initiator to obtain a syrup (b6). The amount of the polyisocyanate component and polyol component used was NCO/OH (equivalent ratio) = 1.3, and the concentration of the monomer based on the syrup (b6) was 50% by weight.

### (Production Example 8: Preparation of Second Curable Resin Composition (b))

Into a reaction vessel equipped with a cooling pipe, a thermometer and a stirrer were charged 71 parts by weight of IBXA, 19 parts by weight of BA and 5 parts by weight of AA as (meth)acryl-based monomers, and 70 parts by weight of poly(oxytetramethylene)glycol having a number average molecular weight of 650 (PTMG 650 manufactured by Mitsubishi Chemical Corporation) as a polyol. Then, 26.1 parts by weight of HXDI were added dropwise with stirring, and the mixture was reacted at 65°C for 5 hours to obtain an urethane polymer-acryl-based monomer mixture. Thereafter, further 3.9 parts by weight of 4-hydroxybutyl acrylate (4HBA manufactured by Nippon Kasei Chemical Co., Ltd) was charged, and the mixture was reacted at 65°C for an hour to obtain an acryloyl group-terminated urethane polymer-acryl-based monomer mixture. Thereafter, 3 parts by weight of trimethylolpropane triacrylate (TMPTA manufactured by OSAKA ORGANIC CHEMICAL INDUSTRY LTD) were added as a crosslinker, and 0.3 parts by weight of bis(2,4,6-trimethylbenzoyl)phenyl-phosphine oxide (trade name "Irgacure 819" manufactured by Ciba Specialty Chemicals Inc.) as a photopolymerization initiator, 1.25 parts by weight of 2,5-hydroxyphenyl and oxirane 1-methoxy-2-propanol (trade name "TINUVIN 400" manufactured by Ciba Specialty Chemicals Inc.) as an ultraviolet absorber, and 1.25 parts by weight of hindered amine light stabilizer of decanedioic acid bis ester, 1,1-dimethylethy hydroperoxide and octane (trade name "TINUVIN 123" manufactured by Ciba Specialty Chemicals Inc.) as a light stabilizer were added to obtain a syrup (b7). The amount of the polyisocyanate component and polyol component used was NCO/OH (equivalent ratio) = 1.25, and the concentration of the monomer based on the syrup (b7) was 50% by weight.

### (Production Example 9: Preparation of Second Curable Resin Composition (b))

To 100 parts by weight of syrup (b4) was added 15 parts by weight of AA to obtain a syrup (b8). In the syrup (b8), the concentration of the monomer based on the syrup (b8) was 57% by weight.

### (Production Example 10: Preparation of First Curable Resin Composition (a))

A solution obtained by adding 0.09 parts by weight of 2,2-dimethoxy-1,2-diphenylethane-1-one (trade name "Irgacure 651" manufactured by Ciba Specialty Chemicals Inc.) and 0.09 parts by weight of 1-hydroxy-cyclohexyl-phenyl-ketone (trade name "Irgacure 184" manufactured by Ciba Specialty Chemicals Inc.) to a mixed monomer solution including 67 parts by weight of BA, 14 parts by weight of cyclohexyl acrylate (CHA) and 19 parts by weight of 4HBA was charged into a four-necked flask, and partially photopolymerized (polymer concentration: 10% by weight) by exposure to ultraviolet rays under an atmosphere of nitrogen to thereby obtain a composition including BA, CHA and 4HBA (hereinafter the composition will be referred to as syrup (s2)). The concentration of the monomer based on the syrup (s2) is 90% by weight.

To 100 parts by weight of syrup (s2) were added 5 parts by weight of heat-expandable microspheres (trade name "Matsumoto Microsphere F-501D" manufactured by Matsumoto Yushi-Seiyaku Co., Ltd.) and 0.08 parts by weight of 1,6-hexanediol diacrylate (HDDA), and the mixture was homogeneously mixed to prepare a composition (hereinafter the composition will be referred to as syrup (a2)). In the syrup (a2), the concentration of the monomer based on the syrup (a2) is 90% by weight.

### (Production Example 11: Preparation of First Curable Resin Composition (a))

A solution obtained by adding 0.05 parts by weight of 2,2-dimethoxy-1,2-diphenylethane-1-one (trade name "Irgacure 651" manufactured by Ciba Specialty Chemicals Inc.) and 0.05 parts by weight of 1-hydroxy-cyclohexyl-phenyl-ketone (trade name "Irgacure 184" manufactured by Ciba Specialty Chemicals Inc.) to a mixed monomer solution including 90 parts by weight of 2-ethylhexyl acrylate (2EHA) and 10 parts by weight of AA was charged into a four-necked flask, and partially photopolymerized (polymer concentration: 7% by weight) by exposure to ultraviolet rays under an atmosphere of nitrogen to thereby obtain a composition including 2EHA and AA (hereinafter the composition will be referred to as syrup (s3)). The concentration of the monomer based on the syrup (s3) is 93% by weight.

To 100 parts by weight of syrup (s3) were added 5 parts by weight of heat-expandable microspheres (trade name "Matsumoto Microsphere F-501D" manufactured by Matsumoto Yushi-Seiyaku Co., Ltd.) and 0.08 parts by weight of HDDA, and the mixture was homogeneously mixed to prepare a composition (hereinafter the composition will be referred to as syrup (a3)). In the syrup (a3), the concentration of the monomer based on the syrup (a3) is 93% by weight.

### (Production Example 12: Preparation of First Curable Resin Composition (a))

To 100 parts by weight of a mixed monomer solution including 80 parts by weight of IBXA and 20 parts by weight of BA were added 25 parts by weight of fluoroethylene vinyl ether copolymer (trade name "Lumiflon LF710F" manufactured by ASAHI GLASS CO., LTD.) as a fluorine-based resin, 1.57 parts by weight of 2-acryloyloxyethyl isocyanate (trade name "Karenz AOI" manufactured by Showa Denko K.K.) as an isocyanate group-containing acryl-based monomer, and 0.1 parts by weight of 2,2-dimethoxy-1,2-diphenylethane-1-one (trade name "Irgacure 651" manufactured by Ciba Specialty Chemicals Inc.), and the mixture was homogeneously mixed to prepare a composition (hereinafter the composition will be referred to as syrup (a4)). In the syrup (a4), the concentration of the monomer based on the syrup (a4) is 80% by weight.

### (Production Example 13: Preparation of First Curable Resin Composition (a))

Into a reaction vessel equipped with a cooling pipe, a thermometer and a stirrer were charged 100 parts by weight of BA as a (meth)acryl-based monomer, 71.6 parts by weight of poly(oxytetramethylene)glycol having a number average molecular weight of 650 (PTMG 650 manufactured by Mitsubishi Chemical Corporation) as a polyol and 0.01 parts by weight of dibutyltin dilaurate (DBTL) as a catalyst. Then, 24.6 parts by weight of HXDI was added dropwise with stirring, and the mixture was reacted at 65°C for 5 hours to obtain an urethane polymer-acryl-based monomer mixture. Thereafter, further 3.8 parts by weight of HEA was charged, and the mixture was reacted at 65°C for an hour to obtain an acryloyl group-terminated urethane polymer-acryl-based monomer mixture. Further, 0.3 parts by weight of 2,2-dimethoxy-1,2-diphenylethane-1-one (trade name "Irgacure 651" (manufactured by Ciba Specialty Chemicals Inc.) was added as a photopolymerization initiator to obtain a syrup (s4). The concentration of the monomer based on the syrup (s4) is 50% by weight.

To 100 parts by weight of syrup (s4) were added 30 parts by weight of heat-expandable microspheres (trade name "Matsumoto Microsphere F-501D" manufactured by Matsumoto Yushi-Seiyaku Co., Ltd.), and the mixture was homogeneously mixed to prepare a composition (hereinafter the composition will be referred to as syrup (a5)). In the syrup (a5), the concentration of the monomer based on the syrup (a5) is 50% by weight.

### (Production Example 14: Preparation of First Curable Resin Composition (a))

To 100 parts by weight of BA were added 100 parts by weight of fluoroethylene vinyl ether copolymer (trade name "Lumiflon LF710E" manufactured by ASAHI GLASS CO., LTD.) as a fluorine-based resin and 0.1 parts by weight of 2,2-dimethoxy-1,2-diphenylethane-1-one (trade name "Irgacure 651" manufactured by Ciba Specialty Chemicals Inc.), and the mixture was homogeneously mixed to prepare a composition (hereinafter the composition will be referred to as syrup (a6)). In the syrup (a6), the concentration of the monomer based on the syrup (a6) is 50% by weight.

### (Example 1)

A syrup (a1) was coated on a support substrate so that the thickness after curing was 100 µm to form a first uncured layer (A). A syrup (b1) was coated on another support substrate so that the thickness after curing was 100 µm to form a second uncured layer (B). The first uncured layer (A) and the second uncured layer (B) were laminated in such a manner as to contact each other such that air bubbles did not enter, and after about one minute, ultraviolet rays were applied using black light and metal halide lamps (irradiance: 9 mW/cm², amount of light: 1200 mJ/cm²), so that both the uncured layers were cured to obtain a cured multilayer sheet having support substrates on both sides.

### (Examples 2 to 7 and Comparative Examples 1, 3 and 4)

Cured multilayer sheets were obtained in the same manner as in Example 1 except that in Examples 1, the type of syrup used and the thickness of the uncured layer formed were changed as shown in Table 1.

### (Comparative Example 2)

A syrup (b4) was coated on a support substrate so that the thickness after curing was 100 µm to form an uncured layer, and another support substrate was then laminated with the layer. Thereafter, ultraviolet rays were applied using black light and metal halide lamps (irradiance: 9 mW/cm², amount of light: 1200 mJ/cm²), so that the uncured layer was cured to form an urethane-acryl polymer sheet (hereinafter referred to as UA sheet) held between support substrates. Further, a syrup (a1) was coated on another support substrate so that the thickness after curing was 100 µm to form an uncured layer. Next, one support substrate of the UA sheet held between support substrates was peeled, the uncured layer formed from the syrup (a1) was laminated with the exposed surface of the UA sheet such that air bubbles did not enter, ultraviolet rays were then applied using black light and metal halide lamps (irradiance: 9 mW/cm², amount of light: 1200 mJ/cm²) to cure the uncured layer, and ultraviolet rays were applied using black light and metal halide lamps (irradiance: 9 mW/cm², amount of light: 1200 mJ/cm²), so that the uncured layer formed from the syrup (a1) was cured to obtain a cured multilayer sheet having support substrates on both sides.

### (Evaluation)

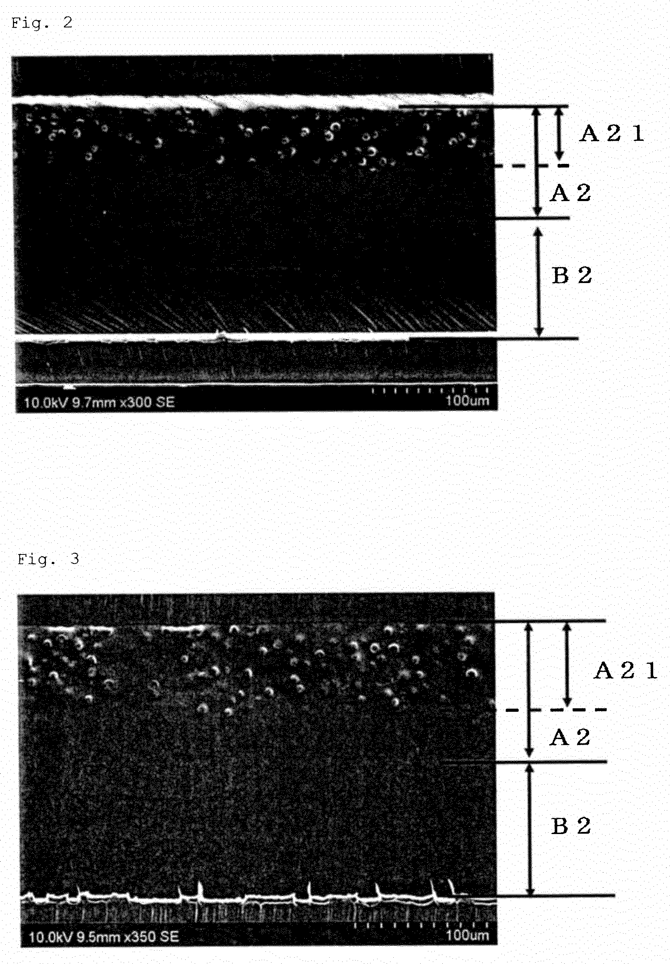

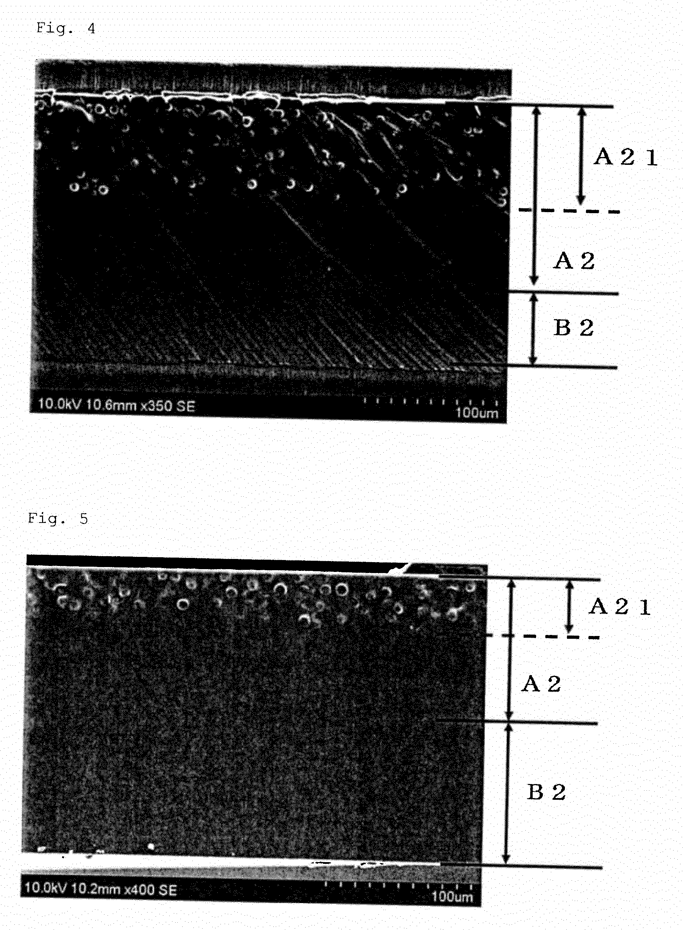

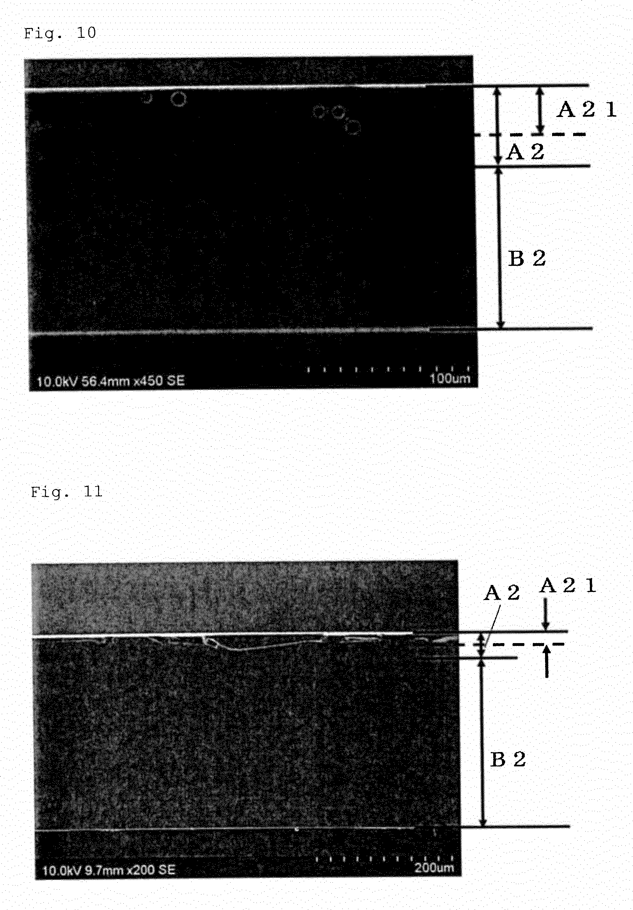

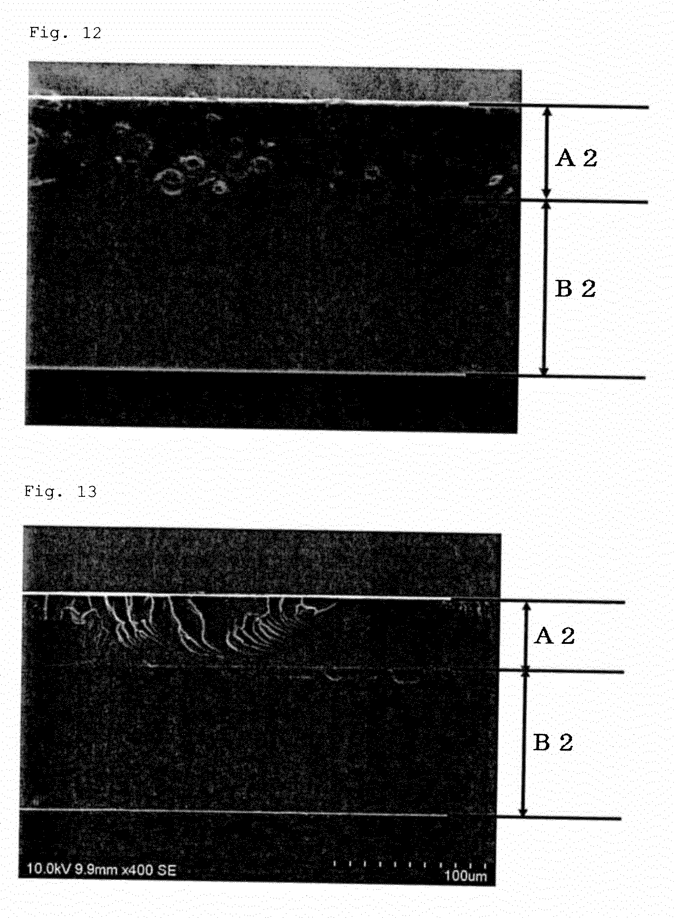

The cross section of the cured multilayer sheet with a support substrate obtained in each of Examples 1 to 7 and Comparative Examples 1, 3 and 4 was observed using a scanning electron microscope (SEM). As a scanning electron microscope (SEM), S-3400N manufactured by Hitachi High-Technologies Corporation was used. These scanning electron microscope photographs (SEM images) are shown in Figs. 2 to 6 and Figs. 9 to 13. Fig. 2 is a 300 x photograph, Figs. 3, 4 and 6 are 350 x photographs, Figs. 5, 9 and 13 are 400 x photographs, Figs. 10 and 12 are 450 x photographs and Fig. 11 is 200 x photographs. In each figure, A2 denotes a first cured layer based on syrups (a1) to (a6), A21 denotes an immiscible substance-eccentrically located portion, and B2 denotes a second cured layer based on syrups (b1) to (b8).

### <Measurement of Thickness of Each Layer)

The thickness of each layer was determined by the method described below. The results are shown in Table 1.

The total thickness associated with cured two layers (first cured layer (A2) and second cured layer (B2)) in the cured multilayer sheet with a support substrate was determined by measuring the overall thickness of the cured multilayer sheet with a support substrate using a 1/1000 dial gauge, and subtracting the thickness of the support substrate from the overall thickness.

The thickness of the second cured layer (B2) based on syrups (b1) to (b8), which is the thickness of the uncured layer, before lamination, formed by syrups (b1) to (b8) formed on the support substrate, was determined by subtracting the thickness of the support substrate from a value obtained by measuring the overall thickness of the support substrate with the uncured layers formed thereon using the 1/1000 dial gauge. The thickness of the first cured layer (A2) based on the syrup (a) was determined by subtracting the thickness of the second cured layer (B2) from the total thickness of the cured two layers.

In Examples 1 to 7, from the scanning electron microscope photograph, the height (thickness) in the thickness direction from the layer surface of the immiscible substance-eccentrically located portion (A21) in the first cured layer (A2) was determined. In Comparative Examples 1, 3 and 4, the height (thickness) in the thickness direction from the layer surface in an area with a non-diffusive substance distributed in the first cured layer (A2) was determined. The height (thickness) associated with the immiscible substance-eccentrically located portion (A21) is an average value (three times) of measurements from the scanning electron microscope photograph.

### (Evaluation of External Appearance)

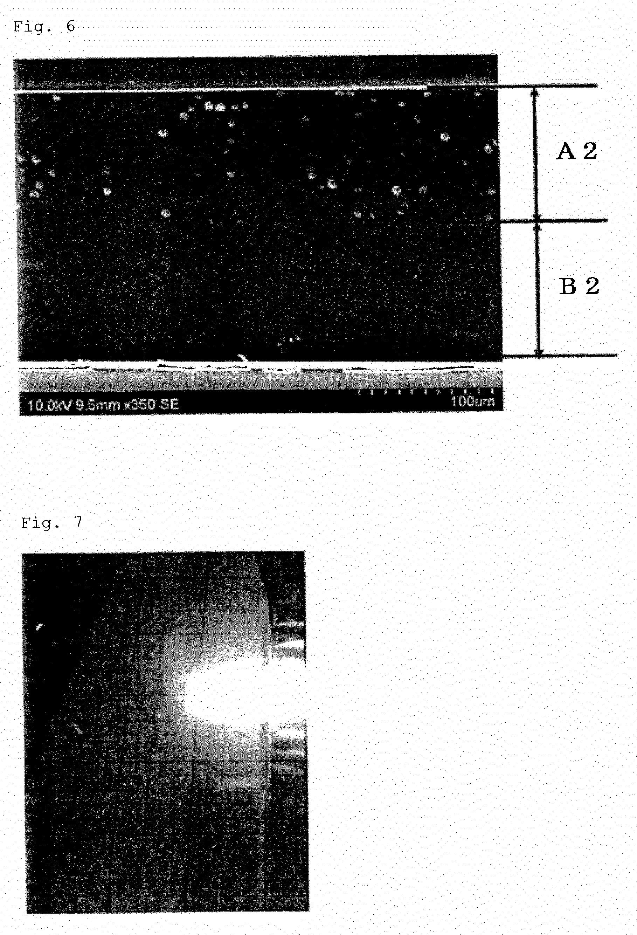

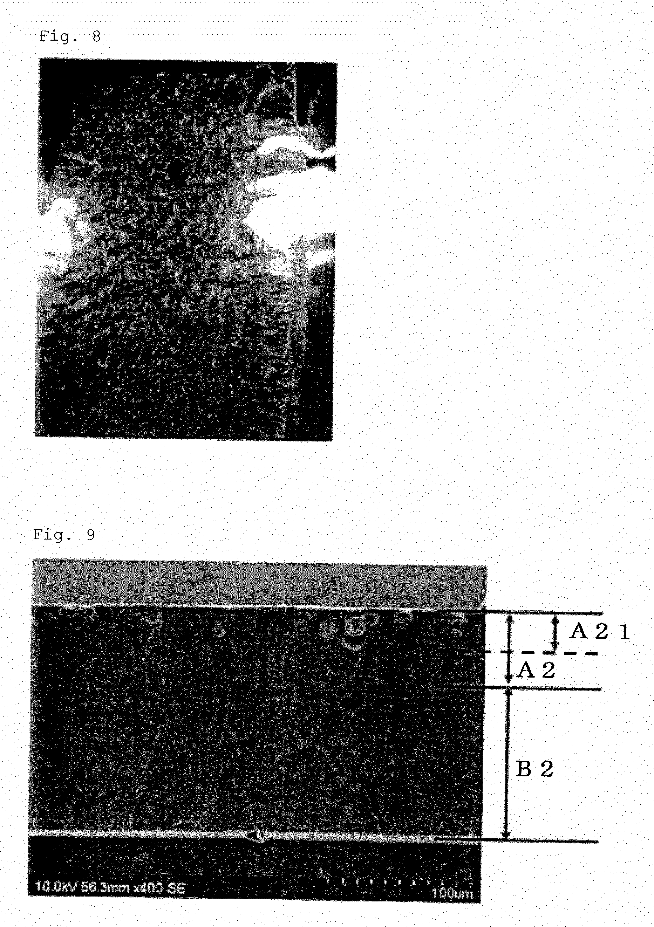

For the cured multilayer sheet with a support substrate obtained in each of Examples 1 to 7 and Comparative Examples 1 to 4, the external appearance was visually observed, and smoothness was evaluated according to the criteria described below. Photographs of the external appearances of the cured multilayer sheet with a support substrate obtained in Example 4 and Comparative Example 2 are shown in Figs 7 and 8. "○" was assigned when the surface was smooth as in Fig. 7, and "x" was assigned when irregularities were generated in the thickness direction as in Fig. 8.

**[Table 1]**

| | First uncured layer (A) | | | Second uncured layer (B) | | | Difference between concentration (c1) and concentration (c2): % by weight | Evaluation | | | | |
|---|---|---|---|---|---|---|---|---|---|---|---|---|
| | Composition (a) | | Thickness (µm) | Composition (b) | | Thickness (µm) | | Thickness (µm) of cured multilayer sheet | | | | External appearance |
| | Type of syrup | Monomer concentration (c1): % by weight | | Type of syrup | Monomer concentration (c2): % by weight | | | Total of first cured layer (A2) and second cured layer | First cured layer (A2) | Immiscible substance-eccentrically located portion (A21) | Second cured layer (B2) | |
| Example 1 | a1 | 89 | 100 | b1 | 54 | 100 | 35 | (B2) 203 | 101 | 60 | 102 | ○ |
| Example 2 | a1 | 89 | 100 | b2 | 70 | 100 | 19 | 196 | 97 | 72 | 99 | ○ |
| Example 3 | a1 | 89 | 140 | b3 | 41 | 60 | 48 | 196 | 138 | 73 | 58 | ○ |
| Example 4 | a1 | 89 | 100 | b4 | 50 | 100 | 39 | 197 | 98 | 38 | 99 | ○ |
| Example 5 | a2 | 90 | 50 | b4 | 50 | 100 | 40 | 160 | 55 | 22 | 105 | ○ |
| Example 6 | a3 | 93 | 50 | b6 | 50 | 100 | 43 | 156 | 52 | 27 | 104 | ○ |
| Example 7 | a4 | 80 | 20 | b7 | 50 | 280 | 30 | 300 | 21 | 14 | 279 | ○ |
| Comparative Example 1 | a1 | 89 | 100 | b5 | 89 | 100 | 0 | 199 | 96 | 99 | 103 | ○ |
| Comparative Example 2 | a1 | 89 | 100 | UA* | - | 100 | (89) | - | - | - | 112 | × |
| Comparative Example 3 | a5 | 50 | 50 | b6 | 50 | 100 | 0 | 158 | 54 | 55 | 104 | ○ |
| Comparative Example 4 | a6 | 50 | 50 | b8 | 57 | 100 | 6 | 143 | 43 | 47 | 100 | ○ |

| | | | | | | | | | | | | |
|---|---|---|---|---|---|---|---|---|---|---|---|---|
| *UA: UA sheet | | | | | | | | | | | | |

It is apparent from Table 1 and figures that if a difference in the concentration of the polymerizable monomer between adjacent first and second uncured layers (A) and (B) is large as in Examples 1 to 7, the thickness of the immiscible substance-eccentrically located portion A21 in the cured multilayer sheet is smaller than the thickness of the first uncured layer (A) before lamination, and particles are eccentrically located on the surface of the cured multilayer sheet. On the other hand, it is apparent that if a difference in the concentration of the polymerizable monomer component between adjacent layers (A) and (B) is small or absent as in Comparative Examples 1, 3 and 4, the thickness of the immiscible substance-eccentrically located portion A21 in the cured multilayer sheet is almost equal to the thickness of the first uncured layer (A) before lamination, and particles are not eccentrically located on the surface of the cured multilayer sheet, but are dispersed in the first cured layer (A2).

In Examples 1 to 7 and Comparative Example 1, the cured multilayer sheet had a smooth external appearance, and was neither formed into a three dimensional-shape nor curled. On the other hand, in Comparative Example 2, the cured multilayer sheet was formed into a three-dimensional shape, and a smooth sheet could not be obtained. This can be accounted for by the following reason. That is, in Comparative Example 2, the UA sheet to be laminated with the first uncured layer (A) is formed of a crosslinked polymer that is already cured, and therefore when the first uncured layer (A) containing particles is laminated with the UA sheet, the polymerizable monomer contained in the first uncured layer (A) penetrates into the UA sheet, so that the UA sheet is swollen. It can be considered that thereafter a curing step is carried out with the UA sheet swollen, and therefore the cured multilayer sheet obtained is formed into a three-dimensional shape.

### DESCRIPTION OF REFERENCE SIGNS

- A: first uncured layer
- A1: first diffusion layer
- A2: first cured layer
- A11, A21: immiscible substance-eccentrically located portion
- A12, A22: immiscible substance-absent portion
- B: second uncured layer
- B1: second diffusion layer
- B2: second cured layer
- C: support substrate
- X: laminated body: before curing step (2)
- Y: laminated body: after curing step (2)
- f: immiscible substance

## Claims

1. A production method of a cured multilayer sheet, comprising a step (1) for adjacently laminating a first uncured layer (A) formed by a first curable resin composition (a) and a second uncured layer (B) formed by a second curable resin composition (b) to form a laminated body (X), and a step (2) for curing the laminated body (X), wherein
the first curable resin composition (a) contains a polymerizable monomer (m1) or a partial polymer thereof, and an immiscible substance (f) immiscible with a polymer (p1) obtained by polymerizing the polymerizable monomer (m1),
the second curable resin composition (b) contains a polymerizable monomer (m2) and a polymer (p2) which are compatible with the polymerizable monomer (m1) and immiscible with the immiscible substance (f),
the concentration (c1) of the polymerizable monomer (m1) based on the polymerizable monomer (m1) or the partial polymer thereof in the first curable resin composition (a) is higher than the concentration (c2) of the polymerizable monomer (m2) based on the polymerizable monomer (m2) and the polymer (p2) in the second curable resin composition (b), and
in the laminating step (1), the immiscible substance (f) is migrated within the first uncured layer (A) to eccentrically distribute the immiscible substance (f) on an interface or near the interface on the side opposite to the second uncured layer (B), and thereafter the curing step (2) is performed.

2. The production method of a cured multilayer sheet according to claim 1, wherein the concentration (c1) is higher than the concentration (c2) by 15% by weight or more.

3. The production method of a cured multilayer sheet according to claim 1 or 2, wherein the immiscible substance (f) is particles or a polymer.

4. The production method of a cured multilayer sheet according to any of claims 1 to 3, wherein the curing step (2) is performed by irradiation of active energy rays.

5. A cured multilayer sheet obtained by the production method according to any of claims 1 to 4.
